(19) **Europäisches Patentamt / European Patent Office / Office européen des brevets**

(11) **EP 4 668 733 A1**

(12) # EUROPEAN PATENT APPLICATION
published in accordance with Art. 153(4) EPC

(43) Date of publication:
**24.12.2025   Bulletin 2025/52**

(21) Application number: **23926081.3**

(22) Date of filing: **13.12.2023**

(51) International Patent Classification (IPC):
***H04N 19/10*** *(2014.01)*

(52) Cooperative Patent Classification (CPC):
**H04N 19/10; H04N 19/136; H04N 19/146; H04N 19/172; H04N 19/20**

(86) International application number:
**PCT/CN2023/138565**

(87) International publication number:
**WO 2024/183387 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   07.03.2023   CN 202310248372
                 14.04.2023   CN 202310444868

(71) Applicant: **Huawei Technologies Co., Ltd.**
**Shenzhen, Guangdong 518129 (CN)**

(72) Inventors:
• **LU, Guo**
  **Shanghai 200240 (CN)**
• **ZHANG, Yiwei**
  **Shanghai 200240 (CN)**
• **SHI, Yibo**
  **Shenzhen, Guangdong 518129 (CN)**
• **HUANG, Yunqi**
  **Shenzhen, Guangdong 518129 (CN)**
• **WANG, Jing**
  **Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

(54) ## IMAGE CODING METHOD AND APPARATUS, IMAGE DECODING METHOD AND APPARATUS, AND SYSTEM

(57)   An image encoding and decoding method, apparatus, and system are disclosed, and relate to the field of image encoding and decoding technologies. An encoding device adjusts a sub-target bit rate of an unencoded image frame in a video based on a target bit rate of the video, a bit rate of an encoded image frame in the video, and image content included **in** the unencoded image frame. For example, the encoding device allocates a high sub-target bit rate to an image frame that includes rich image content, so that a bitstream of the image frame reserves more image information, thereby improving video encoding precision. For another example, the encoding device allocates a low sub-target bit rate to an image frame that includes less image information, so that redundant image information is compressed more effectively **in** the image frame, thereby reducing an encoding bit rate of the image frame **in** the video, and increasing a compression rate of the image frame.

FIG. 4A

EP 4 668 733 A1

## Description

This application claims priorities to Chinese Patent Application No. 202310248372.5, filed with the China National Intellectual Property Administration on March 7, 2023 and entitled "ENCODING AND DECODING METHOD, APPARATUS, AND SYSTEM", and to Chinese Patent Application No. 202310444868.X, filed with the China National Intellectual Property Administration on April 14, 2023 and entitled "IMAGE ENCODING AND DECODING METHOD, APPARATUS, AND SYSTEM", both of which are incorporated herein by reference in their entireties.

## TECHNICAL FIELD

This application relates to the field of image encoding and decoding technologies, and in particular, to an image encoding and decoding method, apparatus, and system.

## BACKGROUND

A video is an image sequence including a plurality of consecutive image frames, and one image frame corresponds to one image. Because a plurality of consecutive image frames are highly similar, to facilitate transmission and/or storage of a video, the video needs to be compressed. A processing device compresses, based on a same target bit rate, the plurality of image frames included in the video, to obtain compressed data. However, the plurality of image frames included in the video include different image content. When the processing device compresses different image frames based on the same target bit rate, a compression effect varies significantly between different image frames, and compression performance of the processing device on the video is affected.

## SUMMARY

This application provides an image encoding and decoding method, apparatus, and system, to resolve a problem that different image frames cannot be effectively compressed at a same target bit rate.

According to a first aspect, this application provides an image encoding method. The image encoding method is applied to an image encoding and decoding system, and is performed by an encoding device included in the image encoding and decoding system. The image encoding method includes: First, the encoding device obtains a video and a target bit rate of the video. The video includes a plurality of consecutive image frames, and the plurality of consecutive image frames include at least one of an encoded image frame and an unencoded image frame. Second, for a start image frame of the plurality of consecutive image frames, the encoding device obtains a sub-target bit rate of the start image frame based on the target bit rate of the video and image content of the start image frame. Further, for each of other image frames in the plurality of consecutive image frames, the encoding device obtains a sub-target bit rate of each of the other image frames based on at least two of the target bit rate of the video, a bit rate of an encoded image frame in the video, and image content of an unencoded image frame in the video. The other image frames indicate image frames that are in the plurality of consecutive image frames and that do not include the start image frame. Finally, the encoding device encodes, based on the sub-target bit rate of each image frame, an image frame that is corresponding to the sub-target bit rate of the image frame and that is in the plurality of consecutive image frames included in the video to obtain a bitstream.

In this application, the encoding device adjusts a sub-target bit rate of an unencoded image frame based on a target bit rate of a video, a bit rate of an encoded image frame, and image content included in the unencoded image frame. Because the sub-target bit rate is related to the image content included in the image frame, the encoding device encodes the image frame based on the sub-target bit rate, so that encoding precision of the image frame can be improved or a compression ratio of the image frame can be increased. For example, the encoding device allocates a high sub-target bit rate to an image frame that includes rich image content, so that a bitstream of the image frame reserves more image information, thereby improving video encoding precision. For another example, the encoding device allocates a low sub-target bit rate to an image frame that includes less image information, so that redundant image information is compressed more effectively in the image frame, thereby reducing an encoding bit rate of the image frame in the video, and increasing a compression rate of the image frame.

In a possible implementation, the plurality of consecutive image frames include an encoded first image frame and an unencoded second image frame, and obtaining the sub-target bit rate of each of the other image frames includes: The encoding device obtains a sub-target bit rate of the second image frame based on the target bit rate of the video, an encoding bit rate of the first image frame, and image content of the second image frame.

In a possible implementation, that the encoding device encodes, based on the sub-target bit rate of each image frame, the image frame that is corresponding to the sub-target bit rate of the image frame and that is in the plurality of consecutive image frames included in the video to obtain the bitstream includes: The encoding device inputs the sub-target bit rate of each image frame into a bit rate control model, to obtain a parameter. The parameter indicates at least one of a quantization parameter and a feature of the image frame, and the feature of the image frame indicates image content of the image frame. For example, the parameter includes a quantization parameter and a parameter of each network in an encoding unit. The encoding device encodes each image frame based on the parameter to obtain a bitstream. A real bit rate of the first image frame indicates a bit length occupied by an encoding result obtained after the first image frame is encoded.

In this application, when the encoding device encodes each image frame based on the parameter, because the parameter is determined by the encoding device based on the sub-target bit rate of the image frame by using the bit rate control model, the parameter adapts to image information included in each image frame, thereby avoiding a problem of low compression performance caused when image frames including different image information are encoded based on a same target bit rate.

In a feasible implementation, the encoding device may further update the bit rate control model based on the sub-target bit rate and the real bit rate of the first image frame. An updated bit rate control model carries information about the sub-target bit rate and the real bit rate of the image frame, and the parameter is obtained based on the sub-target bit rate by using the bit rate control model, so that the parameter carries information about the sub-target bit rate.

In a possible implementation, the plurality of consecutive image frames include a first image frame. The first image frame is any one of the plurality of consecutive image frames. That the encoding device inputs the sub-target bit rate of each image frame into the bit rate control model to obtain the parameter includes: The encoding device inputs the first image frame into the bit rate control model to obtain a feature of the first image frame; and the encoding device obtains a parameter of the first image frame based on the feature and a sub-target bit rate of the first image frame by using the bit rate control model.

In this application, because a feature of an image frame indicates information such as image content included in the image frame, in a process in which the encoding device determines a parameter of the image frame based on the feature and a sub-target bit rate of the image frame, the parameter of the image frame also indicates information such as the image content included in the image frame. Therefore, when the encoding device performs encoding based on the parameter of the image frame, if the image frame includes a large amount of image information, a high sub-target bit rate is set for the image frame, so as to reserve a large amount of image information and improve video encoding precision. If the image frame includes a small amount of image information, a low sub-target bit rate is set for the image frame, so as to increase a compression ratio of redundant information, and reduce a storage space, a communication bandwidth, and the like occupied by a bitstream of the image frame.

In a possible implementation, the plurality of consecutive image frames include an unencoded first image frame and an encoded second image frame, and the first image frame and the second image frame are consecutive image frames. That the encoding device obtains the feature of the first image frame includes: First, the encoding device obtains the first image frame and a residual of the first image frame, where the residual of the first image frame indicates a residual between the first image frame and a reconstructed frame of the second image frame. Second, the encoding device obtains encoding information of the second image frame, where the encoding information of the second image frame indicates at least one of a parameter of the second image frame, encoding quality, and an encoding bit rate of the second image frame, and the encoding quality of the second image frame indicates a difference between the reconstructed frame of the second image frame and the second image frame. Finally, the processing device obtains the feature of the first image frame based on the first image frame, the residual of the first image frame, and the encoding information of the second image frame.

In this application, when encoding an unencoded image frame, the encoding device uses encoding information of an encoded image frame as a reference. When image content of the unencoded image frame and image content of the encoded image frame overlap a lot, the encoding device can increase a compression ratio of the unencoded image frame by compressing content that is included in the unencoded image frame and that overlaps with that of the encoded image frame, thereby increasing the compression ratio of the image frame.

In a possible implementation, the plurality of consecutive image frames include at least two consecutive unencoded image frames. That the encoding device obtains the sub-target bit rate of each of the other image frames includes: First, the encoding device inputs the at least two unencoded image frames into a bit rate allocation model, and obtains a weight of each unencoded image frame. Image content of an image frame includes at least one of time sequence information of the image frame and spatial complexity of the image frame. Then, the encoding device obtains a sub-target bit rate of each unencoded image frame based on the target bit rate of the video and the weights of the at least two unencoded image frames.

In this application, the encoding device obtains a sub-target bit rate of an image frame based on image content of the image frame. For example, for an image frame that includes rich image content, a high sub-target bit rate is allocated, and more image information is reserved, so as to improve video encoding precision. For an image frame that includes a small amount of image content, a low sub-target bit rate is allocated, and redundant information included in the image frame is compressed, so as to reduce an encoding bit rate of the image frame in the video, and increase a compression rate of the image frame.

In a feasible implementation, the bit rate allocation model is updated by the encoding device based on at least two of the target bit rate of the video, real bit rates of at least two unencoded image frames, and encoding information of an encoded image frame. The real bit rates of the at least two unencoded image frames indicate bit lengths occupied by encoding results obtained after the at least two unencoded image frames are encoded.

In a possible implementation, the plurality of consecutive image frames included in the video include at least two consecutive unencoded image frames and an encoded image frame. That the encoding device inputs the at least two unencoded image frames into the bit rate allocation model, to obtain the weight of each unencoded image frame includes: First, the encoding device inputs the at least two unencoded image frames into the bit rate allocation model, to obtain features of the at least two unencoded image frames. Then, the encoding device obtains encoding information of the encoded image frame. The encoding information of the encoded image frame indicates a parameter of the encoded image frame, encoding quality, and an encoding bit rate of the encoded image frame. The encoding quality indicates a difference between a reconstructed image frame of the encoded image frame and the encoded image frame. Finally, the encoding device determines the weights of the at least two unencoded image frames based on the features of the at least two unencoded image frames and the encoding information of the encoded image frame.

In this application, the encoding device processes, based on the information about the encoded image frame, a feature included in the unencoded image frame. For example, a proportion of features repeated with that of the encoded image frame is reduced, redundant information in the image frame is compressed, and an encoding bit rate of a compressed image frame is reduced, to increase a compression rate. A proportion of features not repeated with that of the encoded image frame is increased, and more information that is in the image frame and that is different from that of another image frame is reserved, to improve encoding precision.

According to a second aspect, this application provides an image encoding apparatus. The apparatus includes modules configured to perform the method according to any one of the first aspect or the possible designs of the first aspect.

In a possible design, the image encoding apparatus includes a video information obtaining module, a start-frame sub-target bit rate obtaining module, an other-frame sub-target bit rate obtaining module, an encoded-image-frame obtaining module, and an encoding module. First, the video information obtaining module is configured to obtain a video and a target bit rate of the video. The video includes a plurality of consecutive image frames, and the plurality of consecutive image frames include at least one of an encoded image frame and an unencoded image frame. Second, the start-frame sub-target bit rate obtaining module is configured to: for a start image frame of the plurality of consecutive image frames, obtain a sub-target bit rate of the start image frame based on the target bit rate of the video and image content of the start image frame. Further, the other-frame sub-target bit rate obtaining module is configured to: for each of other image frames in the plurality of consecutive image frames, obtain a sub-target bit rate of each of the other image frames based on at least two of the target bit rate of the video, a bit rate of an encoded image frame in the video, and image content of an unencoded image frame in the video. Finally, the encoding module is configured to encode, based on the sub-target bit rate of each image frame, an image frame that is corresponding to the sub-target bit rate of the image frame and that is in the plurality of consecutive image frames to obtain a bitstream.

According to a third aspect, this application provides an encoding device. The encoding device includes at least one processor and a memory. The memory is configured to store a computer program, so that when the computer program is executed by the at least one processor, the method in any one of the first aspect or the possible designs of the first aspect is implemented.

According to a fourth aspect, this application provides an image decoding method. The image decoding method is applied to an image encoding and decoding system, and is performed by a decoding device included in the image encoding and decoding system. The image decoding method includes: First, the decoding device obtains a bitstream of a video, where the video includes a plurality of consecutive image frames. Then, the decoding device obtains an encoding bit rate of each image frame based on the bitstream. The encoding bit rate of each image frame indicates a bit length occupied by an encoding result obtained after the image frame is encoded. Then, the decoding device obtains a parameter based on the encoding bit rate of each image frame. The parameter indicates at least one of a quantization parameter or a feature of the image frame, and the feature of the image frame indicates image content included in the image frame. Finally, the decoding device decodes the bitstream of the video based on the parameter, to obtain a reconstructed image frame.

In this application, because a parameter of an image frame indicates image content included in the image frame, image frames with different image content have different parameters. For example, a parameter of an image frame including rich image content is different from a parameter of an image frame including a small amount of image content. When the decoding device reconstructs an image frame based on a parameter corresponding to image content of the image frame, the reconstructed image frame can more accurately display the image content included in the image frame, thereby reducing a distortion rate caused when the decoding device decodes the bitstream.

According to a fifth aspect, this application provides an image decoding apparatus. The apparatus includes modules configured to perform the method according to any one of the fourth aspect or the possible designs of the fourth aspect.

In a possible design, the image decoding apparatus includes a bitstream obtaining module, a bitstream parsing module, and a decoding module. The bitstream obtaining module is configured to obtain a bitstream of a video, where the video includes a plurality of consecutive image frames. The bitstream parsing module is configured to parse the bitstream to obtain parameters of the plurality of consecutive image frames, where the parameter indicates at least one of a quantization parameter and a feature of the image frame, and the feature of the image frame indicates image content of the image frame. The decoding module is configured to decode the bitstream of the video based on the parameters to obtain a reconstructed video.

According to a sixth aspect, this application provides an image decoding device. The decoding device includes at least one processor and a memory. The memory is configured to store a computer program, so that when the computer program is executed by the at least one processor, the method in any one of the fourth aspect or the possible designs of the fourth aspect is implemented.

According to a seventh aspect, this application provides an image encoding and decoding device. The encoding and decoding device includes a memory and at least one processor. The memory is configured to store a computer program. The processor is configured to execute the computer program, perform the operation steps of the method in any one of the first aspect or the possible implementations of the first aspect, and perform the operation steps of the method in any one of the fourth aspect or the possible implementations of the fourth aspect.

According to an eighth aspect, this application provides an encoding and decoding system. The encoding and decoding system includes the encoding device according to the third aspect and the decoding device according to the seventh aspect.

According to a ninth aspect, this application provides a chip. The chip includes a processor and a power supply circuit.

The power supply circuit is configured to supply power to the processor. The processor is configured to perform the operation steps of the method in any one of the first aspect or the possible implementations of the first aspect, and perform the operation steps of the method in any one of the fourth aspect or the possible implementations of the fourth aspect.

According to a tenth aspect, this application provides a computer-readable storage medium. The computer-readable storage medium includes computer software instructions.

When the computer software instructions run on a computing device, the computing device is enabled to perform the operation steps of the method in any one of the first aspect or the possible implementations of the first aspect, and perform the operation steps of the method in any one of the fourth aspect or the possible implementations of the fourth aspect.

According to an eleventh aspect, this application provides a computer program product. When the computer program product is run on a computer, the computer is enabled to perform the operation steps of the method in any one of the first aspect or the possible implementations of the first aspect, and perform the operation steps of the method in any one of the fourth aspect or the possible implementations of the fourth aspect. For example, the computer is the foregoing encoding device and decoding device.

For beneficial effects of the second aspect to the eleventh aspect, refer to descriptions of any implementation of the first aspect or the fourth aspect. Details are not described herein again. Based on the implementations provided in the foregoing aspects, this application may further combine technologies in this application to provide more implementations.

## BRIEF DESCRIPTION OF DRAWINGS

FIG. 1 is a diagram of a structure of a neural network;
FIG. 2 is a diagram of a video transmission system according to this application;
FIG. 3A is a diagram of a framework of a video encoding and decoding system according to this application;
FIG. 3B is a diagram of a structure of a video encoding and decoding system according to this application;
FIG. 3C is a diagram of a structure of a weight allocation network according to this application;
FIG. 3D is a diagram of a structure of a bit rate control unit according to this application;
FIG. 3E is a diagram of a structure of an encoding unit according to this application;
FIG. 3F is a diagram of a structure of another encoding unit;
FIG. 4A is a schematic flowchart of an image encoding method according to this application;
FIG. 4B is a parameter obtaining flowchart according to this application;
FIG. 4C is another parameter obtaining flowchart according to this application;
FIG. 4D is a schematic flowchart of an image decoding method according to this application;
FIG. 4E is a schematic flowchart of an image encoding and decoding method according to this application;
FIG. 5 is a diagram of bit rate-distortion performance curves of an encoding and decoding method in different test sets according to this application;

FIG. 6 is a diagram of compression precision of an encoding and decoding method according to this application;

FIG. 7A is a diagram of a structure of an encoding apparatus according to this application;

FIG. 7B is a diagram of a structure of a decoding apparatus according to this application; and

FIG. 8 is a diagram of a structure of an image processing system according to this application.

## DESCRIPTION OF EMBODIMENTS

Terms used in the implementations of this application are only used to explain specific embodiments of this application, but are not intended to limit this application. The following first briefly describes some concepts that may be used in this application.

(1) Video

A video includes a plurality of consecutive image frames. When the plurality of consecutive image frames change by more than 24 frames (frame) of pictures per second, human eyes cannot identify individual static pictures according to the persistence of vision principle, thereby seeing a plurality of smooth and consecutive pictures, that is, a video.

**(2) Video coding**

Video coding means processing of a sequence of image frames that form a video or a video sequence. In a field of video coding, terms "video frame", "picture (picture)", "frame (frame)", "image (image)", and "image frame" may be used as synonyms. Video coding in this application indicates video encoding or video decoding. Video encoding is performed at a source side, and typically includes processing (for example, compressing), under a condition that specific image quality is met, an original video picture to reduce an amount of data required for representing the video picture, for more efficient storage and/or transmission. Video decoding is performed at a destination side, and typically includes inverse processing relative to video encoding, to reconstruct a video picture. "Coding" of a video picture in embodiments should be understood as "encoding" or "decoding" of a video sequence. A combination of an encoding part and a decoding part is also referred to as coding (encoding and decoding). Video encoding may also be referred to as image coding (image coding) or image compression (image compression). Video decoding (image decoding) is a reverse process of video encoding.

(3) Current frame

A current frame is an image frame or an original image, that is encoded or decoded at a current moment.

(4) Feature of an image

A feature of an image means some mathematical and physical attributes that are of the image and that are different from those of another image. For example, the feature may be one or more of a color histogram, a grayscale histogram, an edge, a skeleton, a quantity of connected components, rectangularity, and the like.

(5) Bitstream (Data Rate)

A bitstream is a binary stream generated after a video or an image is encoded. A bitstream is also referred to as a bit stream, a bit rate, or a data stream, to be specific, a quantity of bits transmitted in a unit time. The bitstream is an important part of picture quality control in video or image encoding. For images with same resolution, a larger bitstream of an image indicates a smaller compression ratio and better picture quality.

(6) Neural network

A neural network may include neurons, and the neuron may be an operation unit that uses xs and an intercept of 1 as inputs. An output of the operation unit satisfies the following formula (1).

$$h_{W,x}(x) = f(W^T x) = f\left(\sum_{S=1}^{n} W_S x_S + b^T\right) \text{ Formula (1)}$$

s=1, 2, ..., or n, n is a natural number greater than 1, Ws is a weight of xs, and b is a bias of the neuron. f is an activation function (activation function) of the neuron, and is used to introduce a non-linear characteristic into the neural network, to convert an input signal in the neuron into an output signal. The output signal of the activation function may be used as an input of a next layer. The neural network is a network formed by connecting a plurality of single neurons. The weight represents strength of a connection between different neurons, and determines impact of an input on an output.

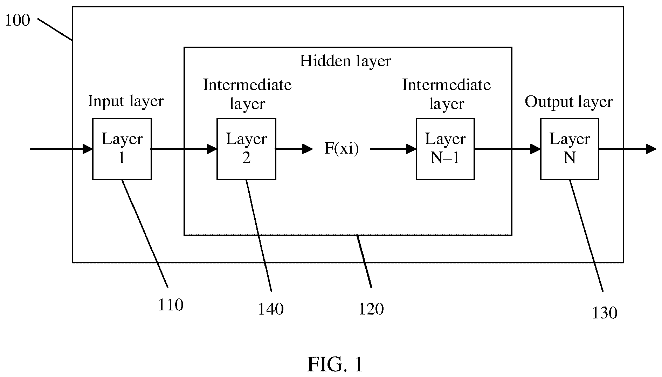

FIG. 1 is a diagram of a structure of a neural network. A neural network 100 includes X processing layers, and X is an integer greater than or equal to 3. A first layer of the neural network 100 is an input layer 110, and is responsible for receiving an input signal. A last layer of the neural network 100 is an output layer 130, and is responsible for outputting a processing result of the neural network. Other layers than the first layer and the last layer are intermediate layers 140, these intermediate layers 140 together form a hidden layer 120, and each intermediate layer 140 in the hidden layer 120 may receive an input signal and output a signal. The hidden layer 120 is responsible for processing an input signal. Each layer represents a logical level of signal processing. Through a plurality of layers, a data signal may be processed by a plurality of levels of logic.

Based on brief descriptions of some concepts that may be used in this application, the following describes implementations of this application with reference to the accompanying drawings.

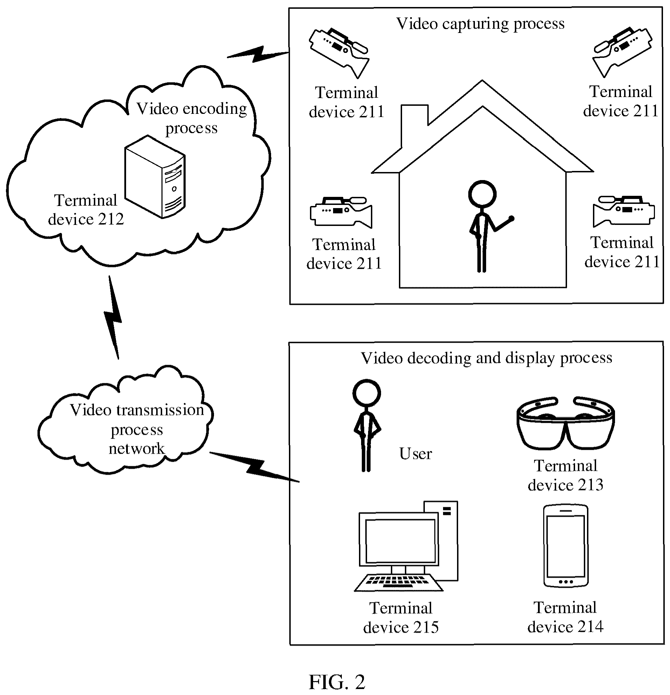

FIG. 2 is a diagram of a video transmission system according to this application. As shown in FIG. 2, a video processing process includes a video capturing process, a video encoding process, a video transmission process, and a video decoding and display process. The video transmission system includes a plurality of terminal devices (a terminal device 211 to a terminal device 215 shown in FIG. 2) and a network. The network may implement a video transmission function. The network may include one or more network devices. The network device may be a router, a switch, or the like.

The terminal device shown in FIG. 2 may be, but is not limited to, user equipment (user equipment, UE), a mobile station (mobile station, MS), a mobile terminal (mobile terminal, MT), or the like. The terminal device may be a mobile phone (for example, a terminal device 214 shown in FIG. 2), a tablet computer, a computer with a wireless transceiver function (for example, the terminal device 215 shown in FIG. 2), a virtual reality (Virtual Reality, VR) terminal device (for example, a terminal device 213 shown in FIG. 2), an augmented reality (Augmented Reality, AR) terminal device, a wireless terminal in industrial control (industrial control), a wireless terminal in self-driving (self-driving), a wireless terminal in a smart city (smart city), a wireless terminal in a smart home (smart home), or the like.

As shown in FIG. 2, in different video processing processes, terminal devices may be different.

For example, in the video capturing process, the terminal device 211 may be a camera apparatus (for example, a video camera or a camera) used for road surveillance, or a mobile phone, a tablet computer, or an intelligent wearable device that has a video capturing function.

For another example, in the video encoding process, a terminal device 212 may be a server, or may be a data center. The data center may include one or more physical devices having an encoding function, for example, a server, a mobile phone, a tablet computer, or another encoding device.

For still another example, in the video decoding and display process, the terminal device 213 may be VR glasses, and a user may control a viewing angle range by turning. The terminal device 214 may alternatively be a mobile phone, and a user may control a viewing angle range of the mobile phone 214 by performing a touch operation, an air gesture operation, or the like. The terminal device 215 may alternatively be a personal computer, and a user may control, by using an input device such as a mouse or a keyboard, a viewing angle range displayed on a display screen.

It may be understood that a video is a general term, and the video is a sequence including a plurality of consecutive frames of images, and one frame corresponds to one image. For example, a panoramic video may be a 360° video, or may be a 180° video. In some possible cases, the panoramic video may alternatively be a "large" range video that exceeds a viewing angle range (110° to 120°) of a human eye, for example, a 270° video.

FIG. 2 is merely an example diagram. The video transmission system may further include another device not shown in FIG. 2. A quantity and types of terminal devices included in the system are not limited in embodiments of this application.

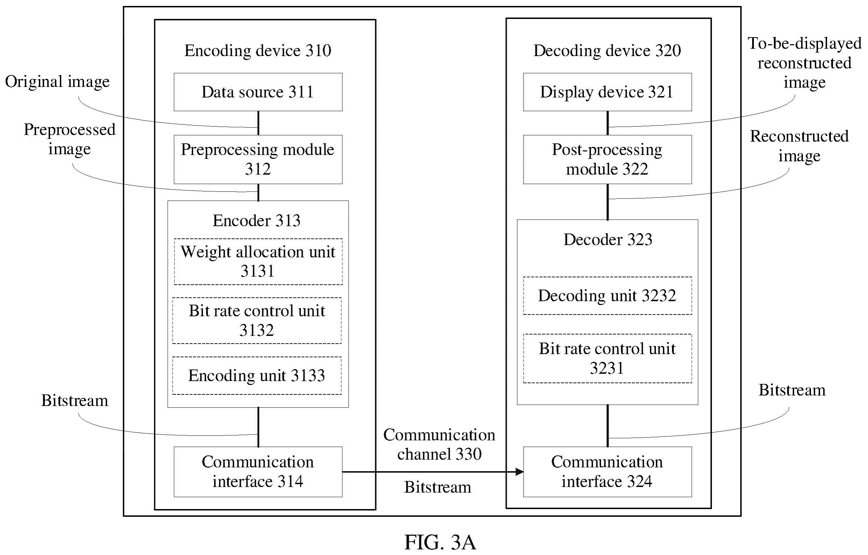

The foregoing describes the video transmission system provided in embodiments of this application with reference to FIG. 2. The following describes a video encoding and decoding system provided in this application with reference to FIG. 3A. FIG. 3A is a diagram of a framework of a video encoding and decoding system according to this application. The video encoding and decoding system includes an encoding device 310 and a decoding device 320. The encoding device 310 establishes a communication connection to the decoding device 320 through a communication channel 330.

The encoding device 310 may implement a video encoding function. The encoding device 310 may be the terminal device 212 shown in FIG. 2, or may be a data center having a video encoding capability. For example, the data center includes a plurality of servers.

The encoding device 310 may include a data source 311, a preprocessing module 312, an encoder 313, and a communication interface 314.

The data source 311 may include or may be any type of electronic device configured to capture a video, and/or any type of source video generation device, for example, a computer graphics processor configured to generate a computer animation scene or any type of device configured to obtain and/or provide a source video or a computer-generated source video. The data source 311 may alternatively be any type of internal memory or memory that stores the source video. The source video may include a plurality of video streams (bitstreams), images, or the like captured by a plurality of video capturing apparatuses (like video cameras).

An image may be considered as a two-dimensional array or matrix of pixels (picture element). A pixel in the array may also be referred to as a sample. A quantity of samples in horizontal and vertical directions (or axes) of the array or the image defines a size and/or resolution of the image. For representation of a color, three color components are usually used. To be specific, the image may be represented as or include three sample arrays. For example, in an RGB format or color space, an image includes corresponding red, green, and blue sample arrays. However, in video encoding, each pixel is usually represented in a luma/chroma format or color space. For example, for an image in a YUV format, Y indicates a luma (luma) component (sometimes indicated by L), and U and V indicate two chroma components. The luma component Y represents luma or gray level intensity (for example, the two are the same in a grayscale image), while the two chroma (chroma) components U and V represent chroma or color information components. Correspondingly, the image in the YUV format includes a luma sample array of luma sample values (Y) and two chroma sample arrays of chroma values (U and V). An image in the RGB format may be transformed or converted into an image in the YUV format and vice versa. This process is also referred to as color conversion or transformation. If an image is monochrome, the image may include only a luma sample array. In this application, an image transmitted by the data source 311 to the preprocessing module 312 may also be referred to as an original image or a source image.

The preprocessing module 312 is configured to receive a source video or a plurality of frames of images, and preprocess the source video or the plurality of frames of images to obtain preprocessed images. The source video may be a panoramic video. For example, preprocessing performed by the preprocessing module 312 may include video clipping/splicing, color format conversion (for example, conversion from RGB to YCbCr), and the like. For example, the preprocessing module 312 may divide the source video into at least one group of pictures (mini-group of pictures, min-gop), where each group of pictures includes a plurality of consecutive image frames. For example, a video is divided into a group of pictures 1 to a group of pictures n, and the group of pictures 1 includes an I frame, a B frame, and a P frame. For another example, the preprocessing module 312 may alternatively directly divide the source video into a plurality of consecutive image frames.

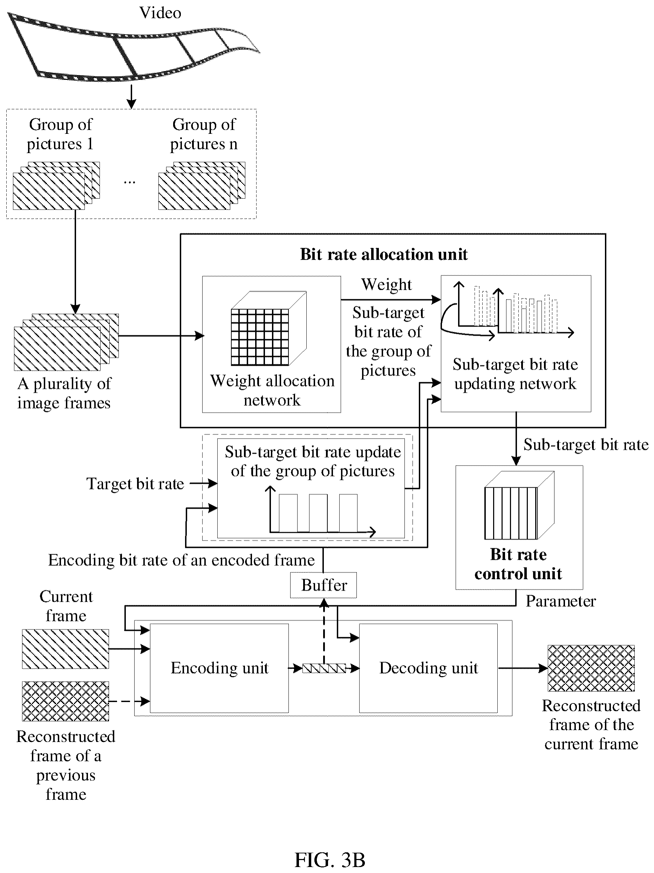

The encoder 313 is configured to: receive the preprocessed images, and encode the preprocessed images to obtain encoded data (for example, a bitstream). The encoder 313 may include a bit rate allocation unit 3131, a bit rate control unit 3132, and an encoding unit 3133. For example, as shown in FIG. 3B, FIG. 3B is a diagram of a structure of a video encoding and decoding system according to this application.

As shown in FIG. 3B, the bit rate allocation unit 3131 obtains a sub-target bit rate of an image based on image content included in the image, so that the sub-target bit rate of the image matches the image content. The image content may be at least one of time sequence information and spatial complexity of the image. For example, the spatial complexity of the image may be texture complexity, luma complexity, chroma complexity, or the like, and the time sequence information of the image is an order of the image in an image sequence.

The bit rate allocation unit 3131 includes a weight allocation network and a sub-target bit rate updating network. The weight allocation network obtains a weight of the image based on the image content. The sub-target bit rate updating network obtains a sub-target bit rate of an image frame based on at least two of a weight of the image frame, a bit rate of an encoded frame, and a target bit rate of a video. The following specifically describes a process in which the weight allocation network obtains the weight of the image. In this application, a function of the bit rate allocation unit 3131 may be implemented by using a bit rate allocation model, and a function of the weight allocation network may be implemented by using a weight allocation model.

That the weight allocation network obtains the weight of the image based on the image content includes the following two cases.

In a first possible example, the weight allocation network calculates the weight of the image based on at least one of time sequence information and spatial complexity of an unencoded image.

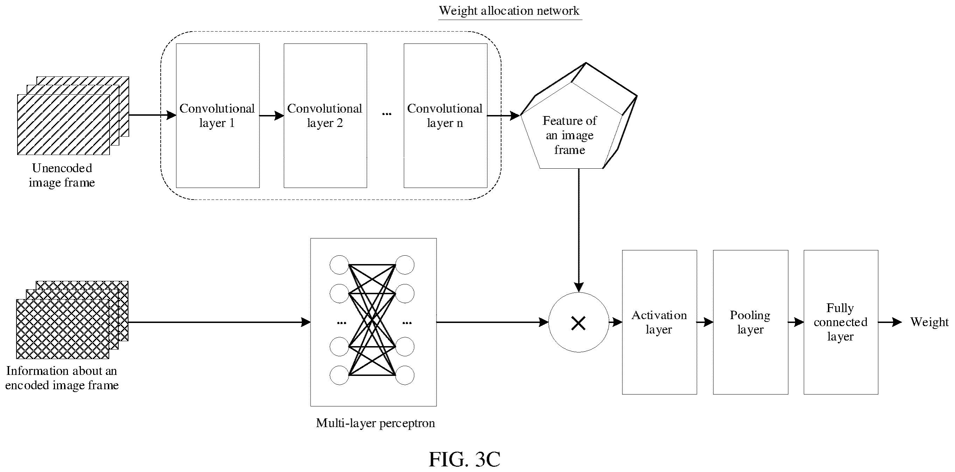

In a second possible example, the weight allocation network calculates the weight of the image based on at least one of information about an encoded image and time sequence information and spatial complexity of an unencoded image. For a specific structure and a training process of the weight allocation network, refer to the following description in FIG. 3C. Details are not described herein.

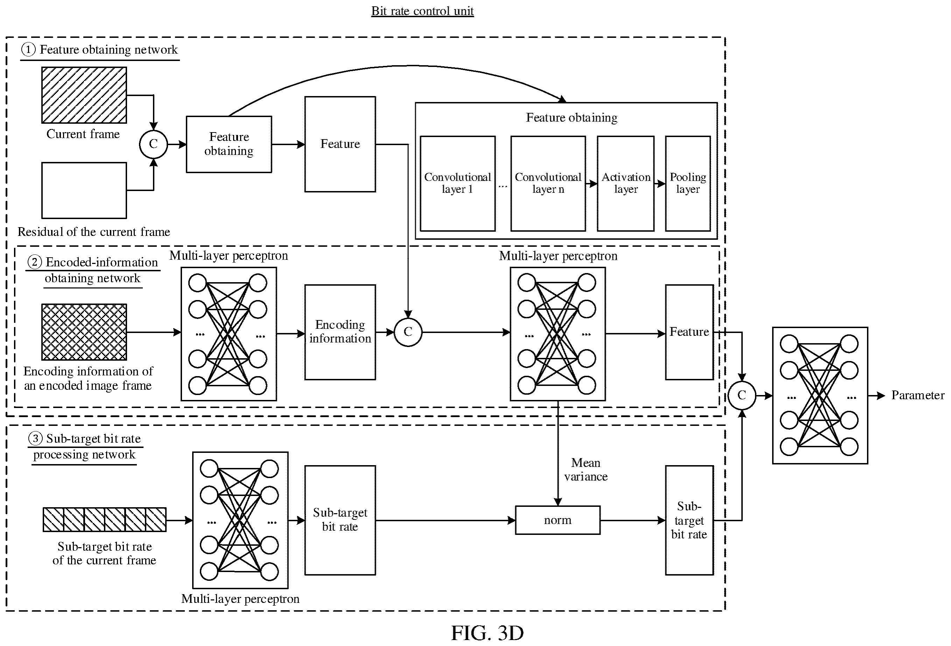

Based on different requirements of different application scenarios (for example, a real-time (real-time or online) scenario or an offline (offline) scenario), the bit rate control unit 3132 outputs a parameter based on the sub-target bit rate obtained by the bit rate allocation unit 3131. For a specific structure and a training process of the bit rate control unit, refer to the following description in FIG. 3D. Details are not described herein. In this application, a function of the bit rate control unit may be implemented by using a bit rate control model.

The encoding unit 3133 encodes a video or an image sequence based on the parameter obtained by the bit rate control unit 3132 to obtain a bitstream.

The communication interface 314 is configured to receive the bitstream, and send the bitstream (or a version of the bitstream obtained after any other processing) to another device such as the decoding device 320 or any other device through the communication channel 330, so as to store, display, or directly reconstruct an original image frame, or the like.

The decoding device 320 may implement a function of video decoding or image decoding. As shown in FIG. 2, the decoding device 320 may be any one of the terminal device 213 to the terminal device 215 shown in FIG. 2. The decoding device 320 may include a display device 321, a post-processing module 322, a decoder 323, and a communication interface 324.

The communication interface 324 is configured to receive a bitstream (or a version of the bitstream obtained after any other processing) from the encoding device 310 or any other encoding device such as a storage device.

The communication interface 314 and the communication interface 324 may be configured to send or receive a bitstream through a direct communication link between the encoding device 310 and the decoding device 320. The direct communication link may be a wired or wireless connection, or may be any type of network, for example, a wired network, a wireless network, or any combination thereof, or any type of private network and public network, or any combination thereof.

Each of the communication interface 324 and the communication interface 314 may be configured as a unidirectional communication interface or a bidirectional communication interface indicated by an arrow from the encoding device 310 to the corresponding communication channel 330 of the decoding device 320 shown in FIG. 3A, and may be configured to send and receive a message to establish a connection and the like, confirm and exchange information transmitted through the communication channel 330, such as any other information related to data transmission like transmission of encoded compressed data (such as a bitstream), and so on.

The decoder 323 is configured to receive encoded data (such as a bitstream), and decode the encoded data to obtain decoded data (such as a video or an image). For example, the decoder 323 may include a bit rate control unit 3231 and a decoding unit 3232. The bit rate control unit 3231 is configured to determine a parameter used for decoding a current frame, so that the decoding unit 3232 decodes the bitstream based on the parameter to obtain a reconstructed image.

The post-processing module 322 is configured to perform post-processing on the decoded data to obtain post-processed data (for example, a to-be-displayed reconstructed image or a to-be-displayed reconstructed video). Post-processing performed by the post-processing module 322 may include, for example, video splitting and fusion, color format conversion (for example, conversion from YCbCr to RGB), or any other processing such as generating data for the display device 321 to display.

The display device 321 is configured to receive the post-processed data for display to a user, a viewer, or the like. The display device 321 may be or include any type of display for representing the reconstructed image/video, for example, an integrated or external display screen or monitor. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS), a digital light processor (digital light processor, DLP), or any type of other display screen.

In an optional implementation, the encoding device 310 and the decoding device 320 may transmit the encoded data by using a data forwarding device. For example, the data forwarding device may be a router or a switch.

The structure of the foregoing encoding and decoding system is merely an example for description. In some possible implementations, the encoding and decoding system may further include another device. For example, the encoding and decoding system may further include a terminal-side device or a cloud-side device. After obtaining an original image, a capturing device (the terminal 211 shown in FIG. 2) preprocesses the original image to obtain a preprocessed image, and transmits the preprocessed image to a terminal-side device or a cloud-side device (the terminal 212 shown in FIG. 2). The terminal-side device or the cloud-side device decodes and decodes the preprocessed image.

The foregoing describes the video encoding and decoding system provided in embodiments of this application with reference to FIG. 3A and FIG. 3B. The following describes the weight allocation network in the video encoding and decoding system with reference to FIG. 3C. FIG. 3C is a diagram of a structure of a weight allocation network according to this application. The following separately describes a structure and a training process of the weight allocation network.

① Structure of the weight allocation network.

The weight allocation network includes a convolutional layer, an activation layer, a pooling layer, and a fully connected layer (fully connected layer, FC). The convolutional layer extracts a feature of an image, the activation layer filters the feature obtained by the convolutional layer, and the pooling layer performs pooling on the feature obtained through filtering. The activation layer may use resblock, relu, or the like. The pooling layer may use average pooling, minimum pooling, maximum pooling, or the like. For example, the weight allocation network includes a convolutional layer 1 (3, 64, 3), a convolutional layer 2 (3, 128, 3), a convolutional layer 3 (3, 128, 3), a convolutional layer 4 (3, 128, 3), resblock (128, 3) x 3, and average pooling (average pooling).

In a possible case, a weight allocation process uses encoded image information. The encoded image information may be processed by using a multi-layer perceptron (multi-layer perceptron, MLP). For example, the weight allocation network processes the encoded image information by using the MLP (1, 32, 64) based on a parameter, encoding quality, and an encoding bit rate of an encoded image.

② Training of the weight allocation network.

The encoding device updates the bit rate allocation model based on at least two of a target bit rate of a video, real bit rates of at least two unencoded image frames, and encoding information of an encoded image frame. The real bit rate of each unencoded image frame indicates a bit length occupied by an encoding result obtained after the unencoded image frame is encoded.

For example, the video includes a plurality of groups of pictures, and formula (2) is used as a loss function during training of the weight allocation network.

$$L_{RA} = \sum_{i=t}^{t+n*mg} R_i + \lambda_g D_i \quad \text{Formula (2)}$$

A subscript t represents a start time of a current group of pictures, n represents a quantity of groups of pictures considered in the training process, and $\lambda_g$ represents a global $\lambda$ value of the current group of pictures. $\lambda_g$ determines a target bit rate value for encoding the current group of pictures.

The foregoing describes the weight allocation network with reference to FIG. 3C, and the following describes the bit rate control unit in FIG. 3A and FIG. 3B with reference to FIG. 3D. FIG. 3D is a diagram of a structure of a bit rate control unit according to this application. The following separately describes a structure and a training process of the bit rate control unit.

① Structure of the bit rate control unit.

The bit rate control unit includes a feature extraction network and a sub-target bit rate processing network.

The feature extraction network extracts a feature of an image frame. The feature extraction network may include a convolutional layer, an activation layer, and a pooling layer. The activation layer may use resblock, relu, or the like. The pooling layer may use average pooling, minimum pooling, maximum pooling, or the like. For example, the feature extraction network includes a convolutional layer 1 (3, 16, 2), a convolutional layer 2 (3, 32, 2), a convolutional layer 3 (3, 64, 2), a convolutional layer 4 (3, 64, 2), resblock (64, 3) x 3, and average pooling.

In a possible case, the bit rate control unit further includes an encoded-information obtaining network. The encoded-information obtaining network is configured to obtain information about an encoded image frame. For example, the encoded-information obtaining network includes an MLP 1 and an MLP 2. Encoded image information is processed by using the MLP 1 (1, 32, 64), to obtain a processing result. The processing result and the feature are used as inputs of the MLP 2 (256, 684, 192), to obtain a feature after the encoded image information is referenced.

The sub-target bit rate processing network processes a sub-target bit rate. The sub-target bit rate processing network includes a third MLP and a norm function. For example, the sub-target bit rate processing network uses the sub-target bit rate as an input of an MLP 3 (1, 32, 64), to obtain a processing result, and uses the processing result and an average value and a variance that are output by the MLP3 as inputs of the norm function, to obtain a processed sub-target bit rate.

② Training of the bit rate control unit.

During training of the bit rate control unit, the bit rate allocation unit is not considered, and a connection sequence between the bit rate control unit and the encoder is reversed. A plurality of image frames include a first image frame, and the first image frame indicates any one of the plurality of image frames. Using the first image frame as an example, a training process is described as follows: The bit rate control unit is updated based on a sub-target bit rate and a real bit rate of the first image frame. The real bit rate of the first image frame indicates a bit length occupied by an encoding result obtained after the first image frame is encoded. For a specific description of the training process of the bit rate control unit, refer to related content in the following step ① to step ⑤.

Step ①: The encoder encodes the first image frame by using a randomly generated parameter to obtain the real bit rate of the first image frame; and inputs the bit rate into the bit rate control unit, to obtain a predicted parameter predicted by the bit rate control unit.

Step ②: The encoder encodes the first image frame by using the predicted parameter, to obtain an encoding bit rate of the first image frame.

Step ③: Calculate a difference between the encoding bit rate of the first image frame and the sub-target bit rate of the first image frame. For a manner of calculating the difference, refer to formula (3) and formula (4).

$$L_{RI} = \left(R_{target} - R_{real}\right)^2 \text{ Formula (3)}$$

$$R_{real} = C\left(RI\left(R_{target}\right)\right) \text{ Formula (4)}$$

$L_{RI}$ indicates the difference, $R_{target}$ indicates the sub-target bit rate, and $R_{real}$ indicates the real bit rate.

Step ④: If the difference is greater than a specified threshold, repeatedly perform step ① to step ③ by using a non-first image frame in the plurality of image frames until the difference is less than or equal to the specified threshold, and perform step ⑤.

Step ⑤: If the difference is less than or equal to the specified threshold, output an updated bit rate control model.

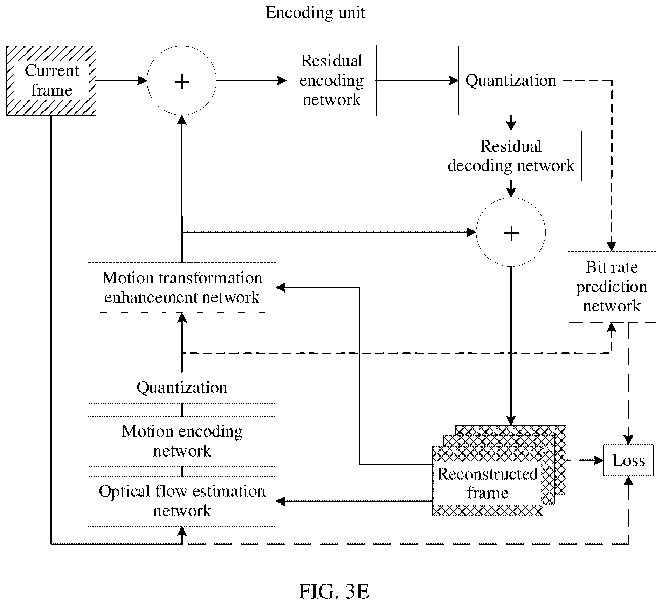

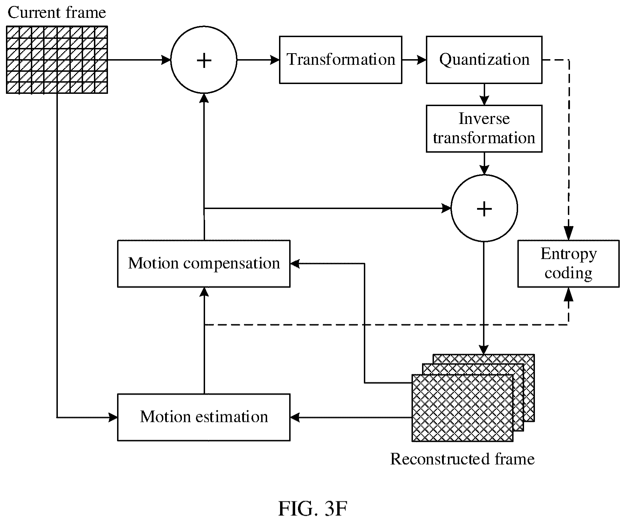

The foregoing describes the bit rate control unit with reference to FIG. 3D. The following describes the encoding units in FIG. 3A and FIG. 3B with reference to FIG. 3E. FIG. 3E is a diagram of a structure of an encoding unit according to this application. As shown in FIG. 3E, the encoding unit in this application includes a residual encoding network, quantization, a residual decoding network, a motion transformation enhancement network, a motion encoding network, an optical flow estimation network, a bit rate prediction network, and the like. FIG. 3F is a diagram of a structure of another encoding unit. Different from the encoding unit shown in FIG. 3F, the encoding unit in this application uses a deep learning model. For specific content of the deep learning model, refer to the conventional technology. Details are not described herein.

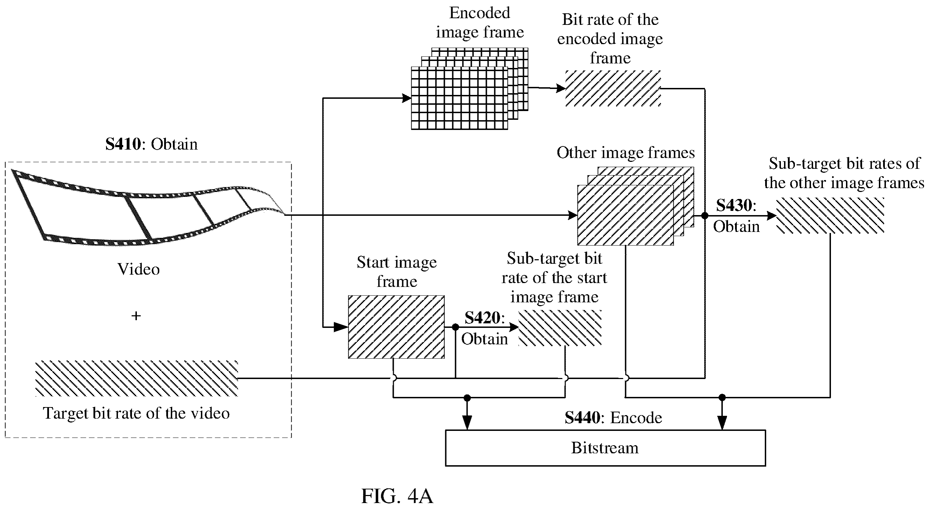

The foregoing describes the video encoding and decoding system provided in this application with reference to FIG. 3A to FIG. 3F. The following describes an image encoding and decoding method provided in this application with reference to FIG. 4A. FIG. 4A is a schematic flowchart of an image encoding method according to this application. An example in which the encoding device 310 and the decoding device 320 in FIG. 3A perform an image encoding and decoding process is used for specific description. As shown in FIG. 4A, the image encoding method includes the following steps.

Step S410: The encoding device obtains a video and a target bit rate of the video.

The video includes a plurality of consecutive image frames. The target bit rate of the video varies with an application scenario. For example, for a same video, a target bit rate of the video is a bit rate 1 if the video is in an offline scenario, and the target bit rate of the video is a bit rate 2 if the video is in an offline scenario, where the bit rate 1 is less than the bit rate 2.

For example, the video includes consecutive image frames 1, 2, and 3. The image frame 1 and the image frame 2 are unencoded image frames, the image frame 3 is an encoded image frame, and the target bit rate of the video is m, for example, m is 256 kilobits per second (kilobits per second, kbps).

Step S420: For a start image frame of the plurality of consecutive image frames, the encoding device obtains a sub-target bit rate of the start image frame based on the target bit rate of the video and image content of the start image frame.

Step S430: For each of other image frames in the plurality of consecutive image frames, the encoding device obtains a sub-target bit rate of each of the other image frames based on at least two of the target bit rate of the video, a bit rate of an encoded image frame in the video, and image content included in an unencoded image frame in the video. The other image frames indicate image frames that are in the plurality of consecutive image frames and that do not include the start image frame. In this application, image content included in an image frame may also be referred to as image information included in the image frame.

For example, the video includes consecutive image frames 2 and 3. The image frame 2 is an unencoded image frame, and the image frame 3 is an encoded image frame. The encoding device obtains a sub-target bit rate of the image frame 2 based on the target bit rate of the video, an encoding bit rate of the image frame 3, and image content of the image frame 2.

In a first possible case, the plurality of consecutive image frames include at least two unencoded image frames. That the encoding device obtains the sub-target bit rate of each of the other image frames includes: First, the encoding device inputs the at least two unencoded image frames into a bit rate allocation model, and obtains a weight of each unencoded image frame. For this process, refer to descriptions in FIG. 3C. Details are not described herein again. Then, the encoding device obtains a sub-target bit rate of each unencoded image frame based on the target bit rate of the video and the weight of each unencoded image frame by using formula (5).

$$\text{Sub-target bit rate} = \text{Target bit rate of the video} * \text{Weight of the image frame Formula (5)}$$

For example, the target bit rate of the video is m, and a weight of the image frame 1 is w1. A sub-target bit rate 1 of the image frame 1 is m*w1.

In this application, the encoding device obtains a sub-target bit rate of an image frame based on image content of the image frame. For example, for an image frame that includes rich image content, a high sub-target bit rate is allocated, and more image information is reserved, so as to improve video encoding precision. For an image frame that includes a small amount of image content, a low sub-target bit rate is allocated, and redundant information included in the image frame is compressed, so as to reduce an encoding bit rate of the image frame in the video, and increase a compression rate of the image frame.

In a second possible case, the plurality of consecutive image frames include at least two unencoded image frames and an encoded image frame, and the at least two unencoded image frames and the encoded image frame are consecutive image frames. That the encoding device obtains the sub-target bit rate of each of the other image frames includes: First, the encoding device obtains a weight of each unencoded image frame based on information about the encoded image frame and image content included in the unencoded image frame. For this process, refer to descriptions in FIG. 3C. Details are not described herein again. Then, the encoding device obtains the sub-target bit rate of each unencoded image frame based on the target bit rate of the video, a bit rate of the encoded image frame, and the weights of the at least two unencoded image frames. In this application, an encoding bit rate of an encoded image frame is also referred to as a bit rate of the encoded image frame.

In this application, the encoding device processes, based on the information about the encoded image frame, a feature included in the unencoded image frame. For example, a proportion of features repeated with that of the encoded image frame is reduced, redundant information in the image frame is compressed, and an encoding bit rate of a compressed image frame is reduced, to increase a compression rate. A proportion of features not repeated with that of the encoded image frame is increased, and more information that is in the image frame and that is different from that of another image frame is reserved, to improve encoding precision.

In a feasible implementation, when the video is divided into at least one group of pictures for encoding and decoding, a sub-target updating subunit obtains a sub-target bit rate of an image frame based on a weight of an image, a bit rate of an encoded frame, and a target bit rate of the group of pictures.

Step S440: The encoding device encodes each image frame based on the sub-target bit rate of the image frame to obtain a bitstream.

A bit rate of the bitstream matches the target bit rate of the video. The matching may mean that the bit rate of the bitstream is consistent with the target bit rate of the video, or may mean that a difference between the bit rate of the bitstream and the target bit rate of the video is less than a specified threshold.

In a possible case, the encoding device inputs the sub-target bit rate of each image frame into a bit rate control model to obtain a parameter. The parameter indicates at least one of a quantization parameter and a feature of the image frame, and the feature of the image frame indicates image content of the image frame. When the parameter indicates the feature of the image frame, the parameter is a weight of a connection between layers of neurons in each network of an encoding unit, for example, a weight of a connection between layers of neurons in a residual encoding network. For related content of the bit rate control model, refer to the description in FIG. 3D. Details are not described herein again. The encoding device encodes each image frame based on the parameter to obtain a bitstream.

In this application, when the encoding device encodes each image frame based on the parameter, because the parameter is determined by the encoding device based on the sub-target bit rate of the image frame by using the bit rate control model, the parameter adapts to image information included in each image frame, thereby avoiding a problem of low compression performance caused when image frames including different image information are encoded based on a same target bit rate.

A process in which the encoding device inputs the sub-target bit rate of each image frame into the bit rate control model to obtain the parameter is classified into the following two cases based on whether encoded image information is introduced.

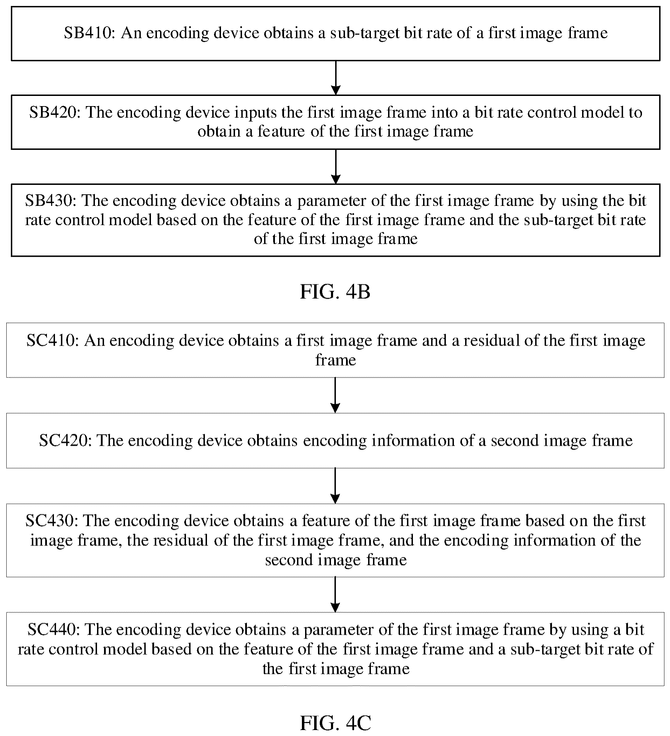

In a first possible case, the plurality of image frames include a first image frame. The first image frame is any one of the plurality of consecutive image frames. FIG. 4B is a parameter obtaining flowchart according to this application. As shown in FIG. 4B, that an encoding device obtains a parameter includes the following steps SB410 to SB430.

Step SB410: The encoding device obtains a sub-target bit rate of the first image frame.

Step SB420: The encoding device inputs the first image frame into a bit rate control model to obtain a feature of the first image frame.

Step SB430: The encoding device obtains a parameter of the first image frame by using the bit rate control model based on the feature of the first image frame and the sub-target bit rate of the first image frame.

In this application, because a feature of an image frame indicates information such as image content included in the image frame, in a process in which the encoding device determines a parameter of the image frame based on the feature and a sub-target bit rate of the image frame, the parameter of the image frame also indicates information such as the image content included in the image frame. Therefore, when the encoding device performs encoding based on the parameter of the image frame, if the image frame includes a large amount of image information, a high sub-target bit rate is set for the image frame, so as to reserve a large amount of image information and improve video encoding precision. If the image frame includes a small amount of image information, a low sub-target bit rate is set for the image frame, so as to increase a compression ratio of redundant information, and reduce a storage space, a communication bandwidth, and the like occupied by a bitstream of the image frame.

In a second possible case, the plurality of image frames include a first image frame and a second image frame. The first image frame is an unencoded image frame, the second image frame is an encoded image frame, and the first image frame and the second image frame are consecutive image frames. FIG. 4C is another parameter obtaining flowchart according to this application. As shown in FIG. 4C, that an encoding device obtains a parameter includes the following step SC410 to step SC440.

Step SC410: The encoding device obtains the first image frame and a residual of the first image frame. The residual of the first image frame indicates a residual between the first image frame and a reconstructed frame of the second image frame.

Step SC420: The encoding device obtains encoding information of the second image frame. The encoding information of the second image frame indicates at least one of a parameter used when the second image frame is encoded, encoding quality, and an encoding bit rate of the second image frame. The encoding quality indicates a difference between the reconstructed frame of the second image frame and the second image frame.

Step SC430: The encoding device obtains a feature of the first image frame based on the first image frame, the residual of the first image frame, and the encoding information of the second image frame.

Step SC440: The encoding device obtains a parameter of the first image frame by using a bit rate control model based on the feature of the first image frame and a sub-target bit rate of the first image frame.

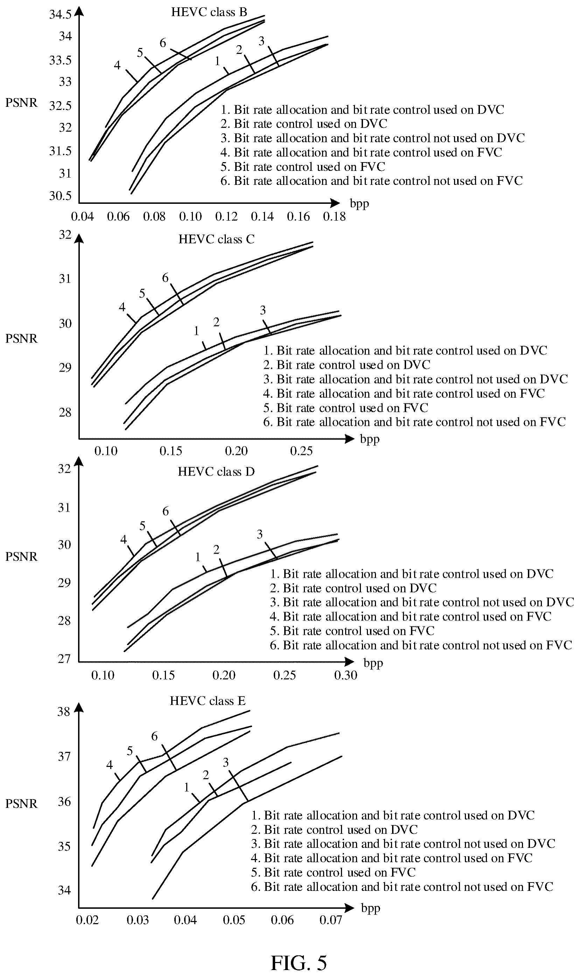

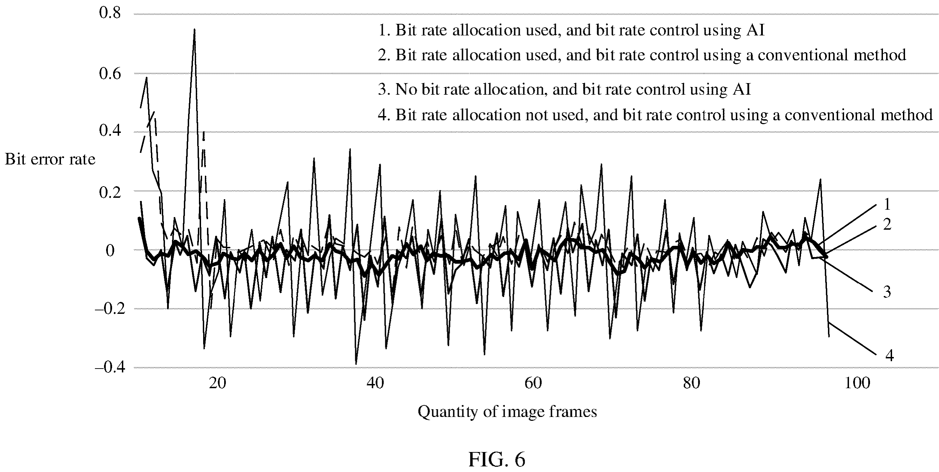

In this application, the encoding device adjusts a sub-target bit rate of an unencoded image frame based on a target bit rate of a video, a bit rate of an encoded image frame, and image content included in the unencoded image frame. Because the sub-target bit rate is related to the image content included in the image frame, the encoding device encodes the image frame based on the sub-target bit rate, so that encoding precision of the image frame can be improved or a compression ratio of the image frame can be increased. For example, the encoding device allocates a high sub-target bit rate to an image frame that includes rich image content, so that a bitstream of the image frame reserves more image information, thereby improving video encoding precision. For another example, the encoding device allocates a low sub-target bit rate to an image frame that includes less image information, so that redundant image information is compressed more effectively in the image frame, thereby reducing an encoding bit rate of the image frame in the video, and increasing a compression rate of the image frame. FIG. 5 is a diagram of bit rate-distortion performance curves of an encoding and decoding method in different test sets according to this application. FIG. 6 is a diagram of compression precision of an encoding and decoding method according to this application. Table 1 is a compression performance table of the encoding and decoding method according to this application in different scenarios. It can be learned from Table 1 that in the image encoding and decoding method in this application, a compression effect is good for a type E sequence mainly in a static scenario.

Table 1

| Test data set | Model | |
|---|---|---|
| | DVC | FVC |
| HEVC B | -10.99% | -9.59% |
| HEVC C | -10.63% | -8.26% |
| HEVC D | -12.17% | -6.90% |
| HEVC E | -18.28% | -20.03% |
| Mean | **-13.02%** | **-11.19%** |

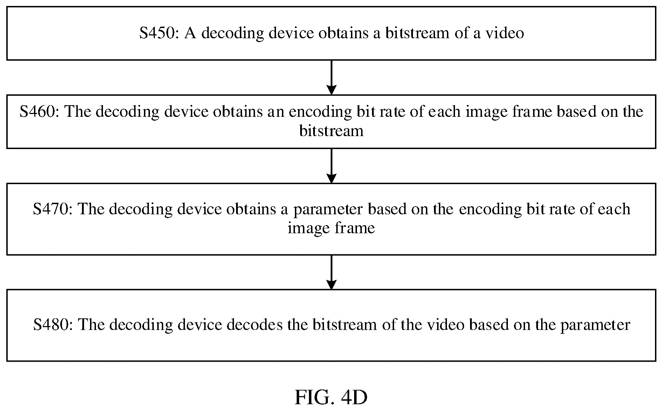

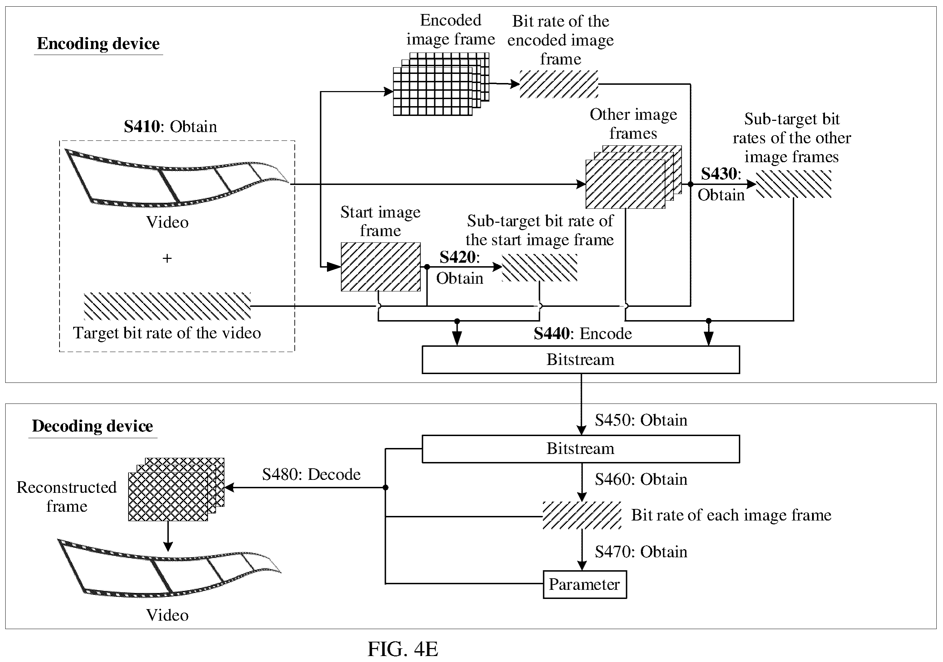

After encoding a video to obtain a bitstream, an encoding device may transmit the bitstream to a decoding device through the communication channel shown in FIG. 3A, and the decoding device decodes the received bitstream to obtain a reconstructed video. FIG. 4D is a schematic flowchart of an image decoding method according to this application. FIG. 4E is a schematic flowchart of an image encoding and decoding method according to this application. As shown in FIG. 4D and FIG. 4E, the decoding method may include the following step S450 to step S480.

Step S450: A decoding device obtains a bitstream of a video.

In a first possible example, an encoding device may send the bitstream of the video to the decoding device after completing encoding the video entirely.

In a second possible example, the encoding device may alternatively perform encoding processing on an original image in real time by using a frame as a unit, and send one frame of bitstream after completing encoding one frame.

The foregoing two examples are merely possible implementations of sending the bitstream provided in this embodiment, and should not be understood as a limitation on this application. For a specific method for sending the bitstream by the encoding device, refer to a conventional technology and descriptions of the communication interface in the foregoing embodiments.

S460: The decoding device obtains an encoding bit rate of each image frame based on the bitstream.

The encoding bit rate of each image frame indicates a bit length occupied by an encoding result obtained after the image frame is encoded.

The parameter indicates at least one of a quantization parameter and a feature of the image frame, and the feature of the image frame indicates image content of the image frame.

S470: The decoding device obtains a parameter based on the encoding bit rate of each image frame.

S480: The decoding device decodes the bitstream of the video based on the parameter, to obtain a reconstructed image frame.

The decoding device displays the reconstructed image frame. Alternatively, the decoding device transmits the reconstructed image frame to another display device, and the another display device displays the reconstructed image frame.

In this application, because a parameter of an image frame indicates image content included in the image frame, image frames with different image content have different parameters. For example, a parameter of an image frame including rich image content is different from a parameter of an image frame including a small amount of image content. When the decoding device reconstructs an image frame based on a parameter corresponding to image content of the image frame, the reconstructed image frame can more accurately display the image content included in the image frame, thereby reducing a distortion rate caused when the decoding device decodes the bitstream.

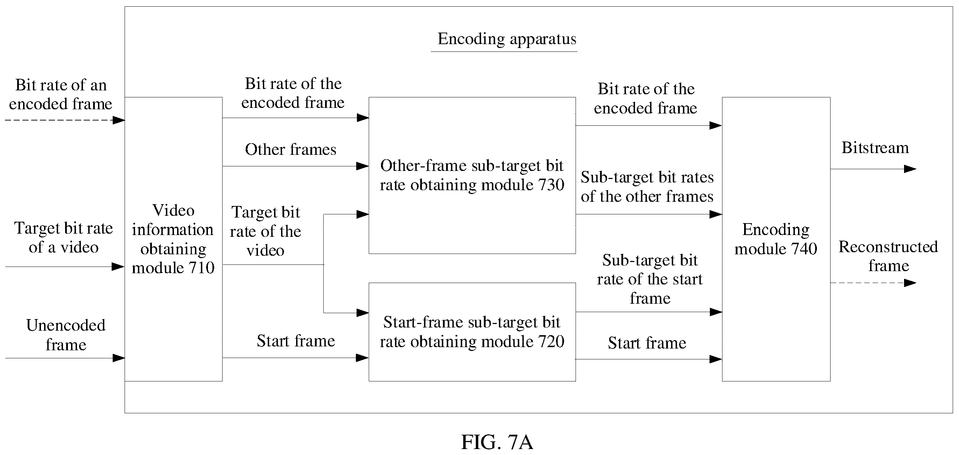

The foregoing describes the encoding and decoding methods provided in this application with reference to FIG. 4A to FIG. 6. The following describes an encoding apparatus provided in this application with reference to FIG. 7A. FIG. 7A is a diagram of a structure of an encoding apparatus according to this application. The encoding apparatus includes a video information obtaining module 710, a start-frame sub-target bit rate obtaining module 720, an other-frame sub-target bit rate obtaining module 730, and an encoding module 740.

The video information obtaining module is configured to obtain a video and a target bit rate of the video. The video includes a plurality of consecutive image frames, and the plurality of consecutive image frames include at least one of an encoded image frame and an unencoded image frame. The start-frame sub-target bit rate obtaining module 720 is configured to: for a start image frame of the plurality of consecutive image frames, obtain a sub-target bit rate of the start image frame based on the target bit rate of the video and image content of the start image frame. The other-frame sub-target bit rate obtaining module 730 is configured to: for each of other image frames in the plurality of consecutive image frames, obtain a sub-target bit rate of each of the other image frames based on at least two of the target bit rate of the video, a bit rate of an encoded image frame in the video, and image content of an unencoded image frame in the video. The encoding module 740 is configured to encode, based on the sub-target bit rate of each image frame, an image frame that is corresponding to the sub-target bit rate of the image frame and that is in the plurality of consecutive image frames to obtain a bitstream. A bit rate of the bitstream matches the target bit rate of the video. The matching may mean that the bit rate of the bitstream is consistent with the target bit rate of the video, or may mean that a difference between the bit rate of the bitstream and the target bit rate of the video is less than a specified threshold.

In a possible case, the plurality of consecutive image frames include an encoded first image frame and an unencoded second image frame, and the other-frame sub-target bit rate obtaining module is specifically configured to obtain a sub-target bit rate of the second image frame based on the target bit rate of the video, an encoding bit rate of the first image frame, and image content of the second image frame. In a possible case, the plurality of consecutive image frames include at least two consecutive unencoded image frames. The other-frame sub-target bit rate obtaining module 730 is specifically configured to input the at least two unencoded image frames into a bit rate allocation model, to obtain a weight of each unencoded image frame. The other-frame sub-target bit rate obtaining module 730 is further specifically configured to obtain a sub-target bit rate of each unencoded image frame based on the target bit rate of the video and the weights of the at least two unencoded image frames.

In a possible case, the plurality of consecutive image frames include an encoded image frame and at least two consecutive unencoded image frames. The other-frame sub-target bit rate obtaining module 730 is further specifically configured to input the at least two unencoded image frames into the bit rate allocation model, to obtain features of the at least two unencoded image frames. The other-frame sub-target bit rate obtaining module 730 is further specifically configured to obtain encoding information of the encoded image frame. The encoding information of the encoded image frame indicates at least one of a parameter of the encoded image frame, encoding quality, and an encoding bit rate of the encoded image frame. The encoding quality indicates a difference between a reconstructed image frame of the encoded image frame and the encoded image frame. The other-frame sub-target bit rate obtaining module 730 is further specifically configured to determine the weights of the at least two unencoded image frames based on the features of the at least two unencoded image frames and the encoding information of the encoded image frame.

In a possible case, the encoding module 740 is specifically configured to input the sub-target bit rate of each image frame into a bit rate control model to obtain a parameter. The encoding module 740 is further specifically configured to encode each image frame based on the parameter to obtain the bitstream.

In a possible case, the plurality of consecutive image frames include a first image frame. The first image frame is any one of the plurality of consecutive image frames. The encoding module 740 is specifically configured to input the first image frame into the bit rate control model to obtain a feature of the first image frame. The encoding module 740 is further specifically configured to obtain a sub-target bit rate of the first image frame. The encoding module is further specifically configured to obtain, by using the bit rate control model, a parameter of the first image frame based on the feature of the first image frame and the sub-target bit rate of the first image frame.

In a possible case, the plurality of consecutive image frames include a first image frame and a second image frame. The second image frame is an encoded image frame consecutive to the first image frame. The encoding module 740 is specifically configured to obtain the first image frame and a residual of the first image frame. The residual of the first image frame indicates a residual between the first image frame and a reconstructed frame of the second image frame. The encoding module 740 is further specifically configured to obtain encoding information of the second image frame. The encoding information is at least one of a parameter of the second image frame, encoding quality, and an encoding bit rate obtained after the second image frame is encoded. The encoding quality is a difference between the reconstructed frame of the second image frame and the second image frame. The encoding module 740 is further specifically configured to obtain the feature of the first image frame based on the first image frame, the residual of the first image frame, and the encoding information of the second image frame.

The encoding apparatus according to this embodiment of this application may correspondingly perform the methods described in embodiments of this application. In addition, the modules and other operations and/or functions in the encoding apparatus are respectively used to implement corresponding procedures of the methods in the foregoing accompanying drawings. For brevity, details are not described herein again.

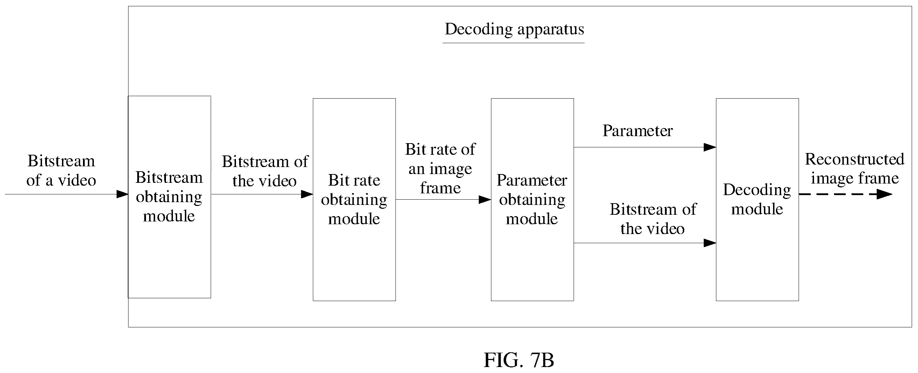

The foregoing describes the image encoding apparatus provided in this application with reference to FIG. 7A. The following describes an image decoding apparatus provided in this application with reference to FIG. 7B. FIG. 7B is a diagram of a structure of an image decoding apparatus according to this application. As shown in FIG. 7B, the image decoding apparatus includes a bitstream obtaining module, a bit rate obtaining module, a parameter obtaining module, and a decoding module.

The bitstream obtaining module is configured to obtain a bitstream of a video, where the video includes a plurality of consecutive image frames. The bit rate obtaining module is configured to obtain an encoding bit rate of each image frame based on the bitstream of the video, where the encoding bit rate of each image frame indicates a bit length occupied by an encoding result obtained after the image frame is encoded. The parameter obtaining module is configured to obtain a parameter based on the encoding bit rate of each image frame. The decoding module is configured to decode the bitstream of the video based on the parameter to obtain a reconstructed image frame.

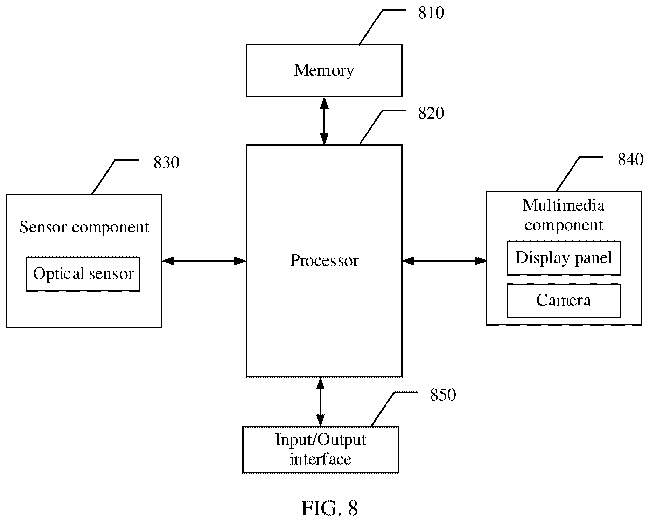

FIG. 8 is a diagram of a structure of an image processing system according to this application. The image processing system is described by using a mobile phone as an example. The mobile phone or a chip system built in the mobile phone includes a memory 810, a processor 820, a sensor component 830, a multimedia component 840, and an input/output interface 850. With reference to FIG. 8, the following describes in detail each component of the mobile phone or the chip system built in the mobile phone.

The memory 810 may be configured to store data, a software program, and a module, and mainly includes a program storage region and a data storage region. The program storage region may store a software program that includes an instruction formed by code, including but not limited to an operating system and an application program required by at least one function, such as a sound playing function or an image playing function. The data storage region may store data created based on use of the mobile phone, such as audio data, image data, and an address book. In this embodiment of this application, the memory 810 may be configured to store a plurality of consecutive image frames included in a video, and the like. In some feasible embodiments, there may be one or more memories. The memory may include a floppy disk, a hard disk such as a built-in hard disk and a removable hard disk, a magnetic disk, an optical disc, a magnetic disc such as a compact disc read-only memory (compact disc read-only memory, CD_ROM) and a DCD_ROM, a non-volatile storage device such as a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory, or a storage medium in any other form well-known in the art.

As a control center of the mobile phone, the processor 820 connects all parts of the entire device through various interfaces and lines, and performs various functions of the mobile phone and processes data by running or executing a software program and/or a software module that are/is stored in the memory 810 and by invoking data stored in the memory 810, to perform overall monitoring on the mobile phone. In this embodiment of this application, the processor 820 may be configured to perform one or more steps in the method embodiments of this application. For example, the processor 820 may be configured to perform one or more steps in S410 to S480 in the foregoing method embodiments. In some feasible embodiments, the processor 820 may be a single-processor structure, a multiprocessor structure, a single-thread processor, a multi-thread processor, or the like. In some feasible embodiments, the processor 820 may include at least one of a central processing unit, a general-purpose processor, a digital signal processor, a neural network processor, an image processing unit, an image signal processor, a microcontroller, a microprocessor, or the like. In addition, the processor 820 may further include another hardware circuit or an accelerator, such as an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor 820 may be a combination of processors implementing a computing function, for example, a combination of one or more microprocessors, or a combination of a digital signal processor and a microprocessor.

The sensor component 830 includes one or more sensors, and is configured to provide status evaluation in various aspects for the mobile phone. The sensor component 830 may include an optical sensor, for example, a CMOS or CCD image sensor, for use in an imaging application, that is, become a component of a camera or a camera lens. In this application, the sensor component 830 may be configured to support a camera in the multimedia component 840 in obtaining a video, an image frame, or the like. In addition, the sensor component 830 may further include an acceleration sensor, a gyroscope sensor, a magnetic sensor, a pressure sensor, or a temperature sensor. The sensor component 830 may detect acceleration/deceleration, an orientation, and an on/off state of the mobile phone, a relative position of the component, a temperature change of the mobile phone, or the like.

The multimedia component 840 provides a screen of an output interface between the mobile phone and a user. The screen may be a touch panel, and when the screen is a touch panel, the screen may be implemented as a touchscreen, to receive an input signal from the user. The touch panel includes one or more touch sensors to sense touches, sliding, and gestures on the touch panel. The touch sensor not only can sense a boundary of a touch or slide operation, but also can detect duration and pressure associated with the touch or slide operation. In addition, the multimedia component 840 further includes at least one camera. For example, the multimedia component 840 includes a front-facing camera and/or a rear-facing camera. When the mobile phone is in an operating mode, such as an image shooting mode or a video shooting mode, the front-facing camera and/or the rear-facing camera may sense an external multimedia signal, and the signal is used to form an image frame. The front-facing camera and the rear-facing camera each may be a fixed optical lens system or have a focal length and an optical zooming capability.

The input/output interface 850 provides an interface between the processor 820 and a peripheral interface module. For example, the peripheral interface module may include a keyboard, a mouse, or a USB (universal serial bus) device. In a possible implementation, the input/output interface 850 may have only one input/output interface, or may have a plurality of input/output interfaces.

Although not shown, the mobile phone may further include an audio component, a communication component, and the like. For example, the audio component includes a microphone, and the communication component includes a wireless fidelity (wireless fidelity, Wi-Fi) module, a Bluetooth module, and the like. Details are not described herein in embodiments of this application.

The foregoing image processing system may be a general-purpose device or a dedicated device. For example, the image processing system may be an edge device (for example, a box carrying a chip having a processing capability). Optionally, the image processing system may alternatively be a server or another device having a computing capability.

It should be understood that the image processing system according to this embodiment may correspond to the encoding apparatus or the decoding apparatus in embodiments, and may correspond to a corresponding body in any method in the foregoing accompanying drawings. In addition, the modules and other operations and/or functions in the encoding apparatus or the decoding apparatus are respectively used to implement corresponding procedures of the methods in the foregoing accompanying drawings. For brevity, details are not described herein again.

Method steps in embodiments may be implemented in a hardware manner, or may be implemented by a processor by executing software instructions. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist as discrete components in the network device or a terminal device.

This application further provides a chip system. The chip system includes a processor, configured to implement a function of the encoding and decoding device in the foregoing methods. In a possible design, the chip system further includes a memory, to store program instructions and/or data. The chip system may include a chip, or may include a chip and another discrete device.

All or some of the foregoing embodiments may be implemented by using software, hardware, firmware, or any

## EP 4 668 733 A1

combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An image encoding method, comprising:

    obtaining a video and a target bit rate of the video, wherein the video comprises a plurality of consecutive image frames;
    for a start image frame of the plurality of consecutive image frames, obtaining a sub-target bit rate of the start image frame based on the target bit rate of the video and image content of the start image frame;
    for each of other image frames in the plurality of consecutive image frames, obtaining a sub-target bit rate of each of the other image frames based on at least two of the target bit rate of the video, a bit rate of an encoded image frame in the video, and image content of an unencoded image frame in the video; and
    encoding, based on the sub-target bit rate of each image frame, an image frame that is corresponding to the sub-target bit rate of the image frame and that is in the plurality of consecutive image frames to obtain a bitstream.

2. The method according to claim 1, wherein the plurality of consecutive image frames comprise an encoded first image frame and an unencoded second image frame; and
    obtaining the sub-target bit rate of each of the other image frames comprises:
    obtaining a sub-target bit rate of the second image frame based on the target bit rate of the video, an encoding bit rate of the first image frame, and image content of the second image frame.

3. The method according to claim 1, wherein
    encoding, based on the sub-target bit rate of each image frame, the image frame that is corresponding to the sub-target bit rate of the image frame and that is in the plurality of consecutive image frames to obtain the bitstream comprises:

    inputting the sub-target bit rate of each image frame into a bit rate control model to obtain a parameter, wherein the parameter indicates at least one of a quantization parameter and a feature of the image frame, and the feature of the image frame indicates image content of the image frame; and
    encoding each image frame based on the parameter to obtain the bitstream.

4. The method according to claim 3, wherein the plurality of consecutive image frames comprise a first image frame, and the first image frame is any one of the plurality of consecutive image frames; and
    inputting the sub-target bit rate of each image frame into the bit rate control model to obtain the parameter comprises:

    inputting the first image frame into the bit rate control model to obtain a feature of the first image frame;
    obtaining a sub-target bit rate of the first image frame; and
    obtaining, by using the bit rate control model, a parameter of the first image frame based on the feature of the first image frame and the sub-target bit rate of the first image frame.

5. The method according to claim 4, wherein the plurality of consecutive image frames comprise a second image frame, and the second image frame is an encoded image frame consecutive to the first image frame; and obtaining the feature of the first image frame comprises:

obtaining the first image frame and a residual of the first image frame, wherein the residual of the first image frame indicates a residual between the first image frame and a reconstructed frame of the second image frame; obtaining encoding information of the second image frame, wherein the encoding information indicates at least one of a parameter of the second image frame, encoding quality, and an encoding bit rate of the second image frame, and the encoding quality indicates a difference between the reconstructed frame of the second image frame and the second image frame; and obtaining the feature of the first image frame based on the first image frame, the residual of the first image frame, and the encoding information of the second image frame.

6. The method according to claim 4 or 5, wherein the method further comprises:
updating the bit rate control model based on the sub-target bit rate and a real bit rate of the first image frame, wherein the real bit rate of the first image frame indicates a bit length occupied by an encoding result obtained after the first image frame is encoded.

7. The method according to any one of claims 1 to 6, wherein the plurality of consecutive image frames comprise at least two consecutive unencoded image frames; and obtaining the sub-target bit rate of each image frame comprises:

inputting the at least two unencoded image frames into a bit rate allocation model, to obtain a weight of each unencoded image frame; and obtaining a sub-target bit rate of each unencoded image frame based on the target bit rate of the video and the weights of the at least two unencoded image frames.

8. The method according to claim 7, wherein the plurality of consecutive image frames comprise an encoded image frame and at least two consecutive unencoded image frames; and inputting the at least two unencoded image frames into the bit rate allocation model, to obtain the weight of each unencoded image frame comprises:

inputting the at least two unencoded image frames into the bit rate allocation model, to obtain features of the at least two unencoded image frames; obtaining encoding information of the encoded image frame, wherein the encoding information of the encoded image frame indicates at least one of a parameter of the encoded image frame, encoding quality, and an encoding bit rate of the encoded image frame, and the encoding quality indicates a difference between a reconstructed image frame of the encoded image frame and the encoded image frame; and determining the weights of the at least two unencoded image frames based on the features of the at least two unencoded image frames and the encoding information of the encoded image frame.

9. The method according to claim 7 or 8, wherein the method further comprises:
updating the bit rate allocation model based on at least two of the target bit rate of the video, real bit rates of the at least two unencoded image frames, and the encoding information of the encoded image frame, wherein a real bit rate of each unencoded image frame indicates a bit length occupied by an encoding result obtained after the unencoded image frame is encoded.

10. An image encoding apparatus, wherein the apparatus comprises:

a video information obtaining module, configured to obtain a video and a target bit rate of the video, wherein the video comprises a plurality of consecutive image frames; a start-frame sub-target bit rate obtaining module, configured to: for a start image frame of the plurality of consecutive image frames, obtain a sub-target bit rate of the start image frame based on the target bit rate of the video and image content of the start image frame; an other-frame sub-target bit rate obtaining module, configured to: for each of other image frames in the plurality of consecutive image frames, obtain a sub-target bit rate of each of the other image frames based on at least two of the target bit rate of the video, a bit rate of an encoded image frame in the video, and image content of an unencoded image frame in the video; and

an encoding module, configured to encode, based on the sub-target bit rate of each image frame, an image frame that is corresponding to the sub-target bit rate of the image frame and that is **in** the plurality of consecutive image frames to obtain a bitstream.

11. The apparatus according to claim 10, wherein the plurality of consecutive image frames comprise an encoded first image frame and an unencoded second image frame; and
the other-frame sub-target bit rate obtaining module is specifically configured to obtain a sub-target bit rate of the second image frame based on the target bit rate of the video, an encoding bit rate of the first image frame, and image content of the second image frame.

12. The apparatus according to claim 10, wherein

the encoding module is specifically configured to input the sub-target bit rate of each image frame into a bit rate control model to obtain a parameter; and
the encoding module is further specifically configured to encode each image frame based on the parameter to obtain the bitstream.

13. The apparatus according to claim 12, wherein the plurality of consecutive image frames comprise a first image frame, and the first image frame is any one of the plurality of consecutive image frames; and

the encoding module is specifically configured to input the first image frame into the bit rate control model to obtain a feature of the first image frame;
the encoding module is further specifically configured to obtain a sub-target bit rate of the first image frame; and
the encoding module is further specifically configured to obtain, by using the bit rate control model, a parameter of the first image frame based on the feature of the first image frame and the sub-target bit rate of the first image frame.

14. The apparatus according to claim 13, wherein the plurality of consecutive image frames comprise a second image frame, and the second image frame is an encoded image frame consecutive to the first image frame; and

the encoding module is specifically configured to obtain the first image frame and a residual of the first image frame, wherein the residual of the first image frame indicates a residual between the first image frame and a reconstructed frame of the second image frame;
the encoding module is further specifically configured to obtain encoding information of the second image frame, wherein the encoding information indicates at least one of a parameter of the second image frame, encoding quality, and an encoding bit rate of the second image frame, and the encoding quality indicates a difference between the reconstructed frame of the second image frame and the second image frame; and
the encoding module is further specifically configured to obtain the feature of the first image frame based on the first image frame, the residual of the first image frame, and the encoding information of the second image frame.

15. The apparatus according to claim 13 or 14, wherein the apparatus further comprises:
a bit rate control model updating module, configured to update the bit rate control model based on the sub-target bit rate and a real bit rate of the first image frame, wherein the real bit rate of the first image frame indicates a bit length occupied by an encoding result obtained after the first image frame is encoded.

16. The apparatus according to any one of claims 10 to 15, wherein the plurality of consecutive image frames comprise at least two consecutive unencoded image frames; and

the other-frame sub-target bit rate obtaining module is specifically configured to input the at least two unencoded image frames into a bit rate allocation model, to obtain a weight of each unencoded image frame; and
the other-frame sub-target bit rate obtaining module is further specifically configured to obtain a sub-target bit rate of each unencoded image frame based on the target bit rate of the video and the weights of the at least two unencoded image frames.

17. The apparatus according to claim 16, wherein the plurality of consecutive image frames comprise an encoded image frame and at least two consecutive unencoded image frames;

the other-frame sub-target bit rate obtaining module is further specifically configured to input the at least two unencoded image frames into the bit rate allocation model, to obtain features of the at least two unencoded image frames;

the other-frame sub-target bit rate obtaining module is further specifically configured to obtain encoding information of the encoded image frame, wherein the encoding information of the encoded image frame indicates at least one of a parameter of the encoded image frame, encoding quality, and an encoding bit rate of the encoded image frame, and the encoding quality indicates a difference between a reconstructed image frame of the encoded image frame and the encoded image frame; and

the other-frame sub-target bit rate obtaining module is further specifically configured to determine the weights of the at least two unencoded image frames based on the features of the at least two unencoded image frames and the encoding information of the encoded image frame.

18. The apparatus according to claim 16 or 17, wherein the apparatus further comprises:

a bit rate allocation model updating module, configured to update the bit rate allocation model based on at least two of the target bit rate of the video, real bit rates of the at least two unencoded image frames, and the encoding information of the encoded image frame, wherein a real bit rate of each unencoded image frame indicates a bit length occupied by an encoding result obtained after the unencoded image frame is encoded.

19. An image decoding method, comprising:

obtaining a bitstream of a video, wherein the video comprises a plurality of consecutive image frames;
obtaining an encoding bit rate of each image frame based on the bitstream, wherein the encoding bit rate of each image frame indicates a bit length occupied by an encoding result obtained after the image frame is encoded;
obtaining a parameter based on the encoding bit rate of each image frame; and
decoding the bitstream of the video based on the parameter to obtain a reconstructed image frame.

20. An image decoding apparatus, comprising:

a bitstream obtaining module, configured to obtain a bitstream of a video, wherein the video comprises a plurality of consecutive image frames;
a bit rate obtaining module, configured to obtain an encoding bit rate of each image frame based on the bitstream, wherein the encoding bit rate of each image frame indicates a bit length occupied by an encoding result obtained after the image frame is encoded;
a parameter obtaining module, configured to obtain a parameter based on the encoding bit rate of each image frame; and
a decoding module, configured to decode the bitstream of the video based on the parameter to obtain a reconstructed image frame.

21. An encoding and decoding device, comprising:

a memory, configured to store a computer program; and
at least one processor, configured to execute the computer program, to implement the method according to any one of claims 1 to 9 or the method according to claim 19.

22. An encoding and decoding system, comprising an encoding device and a decoding device, wherein

the encoding device is configured to perform the encoding method according to any one of claims 1 to 9, to obtain a bitstream based on encoding of a video; and
the decoding device is configured to perform the decoding method according to claim 19, to obtain a reconstructed video of the video based on bitstream decoding.

23. A computer-readable storage medium, wherein the storage medium stores a computer program or instructions, and when the computer program or the instructions are executed by a processing device, the method according to any one of claims 1 to 9 or the method according to claim 19 is implemented.

24. A chip, comprising a processor and a power supply circuit, wherein

the power supply circuit is configured to supply power to the processor; and
the processor is configured to perform the method according to any one of claims 1 to 9 or the method according to

claim 19.

100

Hidden layer

Input layer

Intermediate
layer

Intermediate
layer

Output layer

| Layer 1 | | Layer 2 | F(xi) | Layer N–1 | | Layer N |

110 140 120 130

FIG. 1

FIG. 2

Original image

Preprocessed
image

**Encoding device 310**

| Data source 311 |

| Preprocessing module 312 |

**Encoder 313**

| Weight allocation unit 3131 |

| Bit rate control unit 3132 |

| Encoding unit 3133 |

Bitstream

| Communication interface 314 |

Communication channel 330

Bitstream

**Decoding device 320**

| Display device 321 |

| Post-processing module 322 |

**Decoder 323**

| Decoding unit 3232 |

| Bit rate control unit 3231 |

| Communication interface 324 |

To-be-displayed reconstructed image

Reconstructed image

Bitstream

FIG. 3A

FIG. 3B

FIG. 3C

EP 4 668 733 A1

FIG. 3D

Encoding unit

FIG. 3E

Current frame

Transformation → Quantization

Inverse transformation

Motion compensation

Motion estimation

Entropy coding

Reconstructed frame

FIG. 3F

EP 4 668 733 A1

Encoded
image frame

Bit rate of the
encoded image
frame

**S410**: Obtain

Other image frames

Sub-target bit rates of
the other image frames

Video

+

Target bit rate of the video

Start image
frame

Sub-target bit
rate of the start
image frame

**S430**:
Obtain

**S420**:
Obtain

**S440**: Encode

Bitstream

FIG. 4A

SB410: An encoding device obtains a sub-target bit rate of a first image frame

SB420: The encoding device inputs the first image frame into a bit rate control model to obtain a feature of the first image frame

SB430: The encoding device obtains a parameter of the first image frame by using the bit rate control model based on the feature of the first image frame and the sub-target bit rate of the first image frame

FIG. 4B

SC410: An encoding device obtains a first image frame and a residual of the first image frame

SC420: The encoding device obtains encoding information of a second image frame

SC430: The encoding device obtains a feature of the first image frame based on the first image frame, the residual of the first image frame, and the encoding information of the second image frame

SC440: The encoding device obtains a parameter of the first image frame by using a bit rate control model based on the feature of the first image frame and a sub-target bit rate of the first image frame

FIG. 4C

S450: A decoding device obtains a bitstream of a video

S460: The decoding device obtains an encoding bit rate of each image frame based on the bitstream

S470: The decoding device obtains a parameter based on the encoding bit rate of each image frame

S480: The decoding device decodes the bitstream of the video based on the parameter

FIG. 4D

EP 4 668 733 A1

**Encoding device**

Encoded image frame

Bit rate of the encoded image frame

**S410**: Obtain

Other image frames

Sub-target bit rates of the other image frames

Video

+

**S430**: Obtain

Start image frame

Sub-target bit rate of the start image frame

**S420**: Obtain

Target bit rate of the video

**S440**: Encode

Bitstream

**Decoding device**

S450: Obtain

Bitstream

Reconstructed frame

S480: Decode

S460: Obtain

Bit rate of each image frame

S470: Obtain

Parameter

Video

FIG. 4E

HEVC class B

1. Bit rate allocation and bit rate control used on DVC
2. Bit rate control used on DVC
3. Bit rate allocation and bit rate control not used on DVC
4. Bit rate allocation and bit rate control used on FVC
5. Bit rate control used on FVC
6. Bit rate allocation and bit rate control not used on FVC

HEVC class C

1. Bit rate allocation and bit rate control used on DVC
2. Bit rate control used on DVC
3. Bit rate allocation and bit rate control not used on DVC
4. Bit rate allocation and bit rate control used on FVC
5. Bit rate control used on FVC
6. Bit rate allocation and bit rate control not used on FVC

HEVC class D

1. Bit rate allocation and bit rate control used on DVC
2. Bit rate control used on DVC
3. Bit rate allocation and bit rate control not used on DVC
4. Bit rate allocation and bit rate control used on FVC
5. Bit rate control used on FVC
6. Bit rate allocation and bit rate control not used on FVC

HEVC class E

1. Bit rate allocation and bit rate control used on DVC
2. Bit rate control used on DVC
3. Bit rate allocation and bit rate control not used on DVC
4. Bit rate allocation and bit rate control used on FVC
5. Bit rate control used on FVC
6. Bit rate allocation and bit rate control not used on FVC

FIG. 5

FIG. 6

Encoding apparatus

Bit rate of an encoded frame

Bit rate of the encoded frame

Bit rate of the encoded frame

Bitstream

Target bit rate of a video

Video information obtaining module 710

Other frames

Other-frame sub-target bit rate obtaining module 730

Sub-target bit rates of the other frames

Encoding module 740

Target bit rate of the video

Reconstructed frame

Unencoded frame

Sub-target bit rate of the start frame

Start frame

Start-frame sub-target bit rate obtaining module 720

Start frame

FIG. 7A

FIG. 7B

810

Memory

820

830

Sensor component

Optical sensor

Processor

840

Multimedia component

Display panel

Camera

850

Input/Output interface

FIG. 8

## INTERNATIONAL SEARCH REPORT

| International application No. |
| --- |
| **PCT/CN2023/138565** |

| A. | CLASSIFICATION OF SUBJECT MATTER |
| --- | --- |

H04N 19/10(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, DWPI, ENTXTC, VEN, VCN, VVC, HEVC: 图像, 视频, 目标, 码率, 比特率, 帧, 调整, 调节, 控制, 已编码, 复杂, 量化, 特征, image, video, target, code rate, bit rate, frame, adjust, control, encoded, complex, quantize, feature

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113949874 A (BEIJING KINGSOFT CLOUD NETWORK TECHNOLOGY CO., LTD.) 18 January 2022 (2022-01-18) claims 1-10, and description, paragraphs 0025-0107 | 1-4, 7, 10-13, 16, 19-24 |
| A | CN 101184239 A (CENTRAL ACADEME OF SVA (GROUP) CO., LTD.) 21 May 2008 (2008-05-21) entire document | 1-24 |
| A | CN 101877784 A (SHANGHAI HUAPING SOFTWARE TECHNOLOGY CO., LTD.) 03 November 2010 (2010-11-03) entire document | 1-24 |
| A | CN 105208390 A (HIKVISION DIGITAL TECHNOLOGY CO., LTD. et al.) 30 December 2015 (2015-12-30) entire document | 1-24 |
| A | CN 108810530 A (ZHUHAI YIZHI ELECTRONIC TECHNOLOGY CO., LTD.) 13 November 2018 (2018-11-13) entire document | 1-24 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 February 2024** | **06 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/138565**

**C.    DOCUMENTS CONSIDERED TO BE RELEVANT**

| Category* | Citation of document, with indication, where appropriate, of the relevant passages | Relevant to claim No. |
|---|---|---|
| A | CN 109862359 A (BEIJING SUMAVISION TECHNOLOGIES CO., LTD.) 07 June 2019 (2019-06-07)<br>      entire document | 24 |
| A | WO 2020042269 A1 (WANGSU SCIENCE & TECHNOLOGY CO., LTD.) 05 March 2020 (2020-03-05)<br>      entire document | 1-24 |
| A | WO 2021083286 A1 (GUANGDONG OPPO MOBILE COMMUNICATIONS CO., LTD.) 06 May 2021 (2021-05-06)<br>      entire document | 1-24 |

Form PCT/ISA/210 (second sheet) (July 2022)

**INTERNATIONAL SEARCH REPORT**
Information on patent family members

International application No.

**PCT/CN2023/138565**

| Patent document cited in search report | | | Publication date (day/month/year) | Patent family member(s) | | | Publication date (day/month/year) |
|---|---|---|---|---|---|---|---|
| CN | 113949874 | A | 18 January 2022 | None | | | |
| CN | 101184239 | A | 21 May 2008 | None | | | |
| CN | 101877784 | A | 03 November 2010 | None | | | |
| CN | 105208390 | A | 30 December 2015 | None | | | |
| CN | 108810530 | A | 13 November 2018 | None | | | |
| CN | 109862359 | A | 07 June 2019 | None | | | |
| WO | 2020042269 | A1 | 05 March 2020 | US | 2021409724 | A1 | 30 December 2021 |
| | | | | EP | 3637770 | A1 | 15 April 2020 |
| | | | | CN | 110876060 | A | 10 March 2020 |
| WO | 2021083286 | A1 | 06 May 2021 | CN | 112752103 | A | 04 May 2021 |

**REFERENCES CITED IN THE DESCRIPTION**

**Patent documents cited in the description**

- CN 202310248372
- CN 202310444868X